# EUROPÄISCHE PATENTSCHRIFT

(11) **EP 4 450 691 B1**
(45) Veröffentlichungstag und Bekanntmachung des Hinweises auf die Patenterteilung: **09.04.2025**
(21) Anmeldenummer: 24162409.7
(22) Anmeldetag: 08.03.2024
(51) Int. Cl.: D04H 5/06, D04H 5/08, D04H 1/26, D04H 1/56, B29C 70/00, D01D 5/098

(54) **VERFAHREN ZUR HERSTELLUNG EINES FORMTEILS UND FORMTEIL**
METHOD FOR PRODUCING A MOULDED PART AND MOULDED PART
PROCÉDÉ DE FABRICATION D'UNE PIÈCE MOULÉE ET PIÈCE MOULÉE

(30) Priorität: 17.04.2023 DE 102023109607
(43) Veröffentlichungstag der Anmeldung: 23.10.2024
(73) Patentinhaber: Reifenhäuser GmbH & Co. KG Maschinenfabrik, 53844 Troisdorf (DE)
(72) Erfinder: Rösner, Andreas, 53115 Bonn (DE); Wüscht, Markus, 53359 Rheinbach (DE); Pohl, Tim Carsten, 50935 Köln (DE)
(74) Vertreter: Andrejewski - Honke Patent- und Rechtsanwälte Partnerschaft mbB

(56) Entgegenhaltungen:
- WO-A1-2014/053566
- DE-B3- 102021 118 909

## Beschreibung

Die Erfindung betrifft ein Verfahren zur Herstellung eines Formteils und ein Formteil. Bei den erfindungsgemäßen Formteilen kann es sich insbesondere um Behältnisse zur Aufnahme und/oder Verpackung von Lebensmitteln, beispielsweise von Speisen, handeln. Gemäß einer bevorzugten Ausführungsform handelt es sich bei den erfindungsgemäßen Formteilen um Lebensmittelschalen oder um sonstiges Einweggeschirr. Darüber hinaus kann es sich bei den erfindungsgemäßen Formteilen um Strukturbauteile für den Innenraum von Automobilen, beispielsweise um Auskleidungselemente, handeln. Grundsätzlich liegen aber auch andere Anwendungsmöglichkeiten der erfindungsgemäßen Formteile im Rahmen der Erfindung.

Verfahren zur Herstellung von Formteilen und Formteile sind aus der Praxis in unterschiedlichen Ausführungsformen grundsätzlich bekannt. WO 2014/053566 A1 beschreibt ein Verfahren zur Erzeugung eines Halbzeugs für die Herstellung eines Verbundformteils. DE 10 2021 118 909 B3 offenbart ein Verfahren zur Herstellung eines Vliesstoffes aus Fasern. Viele der aus der Praxis bekannten Formteile bestehen aus Kunststoffmaterialien. Es sind beispielsweise Kunststoffschalen für Speisen bekannt, die im Tiefziehverfahren hergestellt werden. Auch Strukturbauteile für Automobile bestehen in der Regel aus Kunststoff. Solche Formteile aus Kunststoff und die entsprechenden Herstellungsverfahren sind nur wenig nachhaltig. Die Formteile bestehen zumeist vollständig oder zu einem sehr großen Anteil aus Kunststoffen bzw. Rohstoffen, die auf Basis von Erdöl erzeugt werden.

Darüber hinaus sind Formteile bekannt, die aus Zellstoff bzw. Zellulose und mithin aus nachwachsenden Rohstoffen bestehen. Die Herstellungsverfahren für solche zellstoff- bzw. zellulosebasierten Formteile sind aber oftmals aufwendig und kostenintensiv und somit nur wenig wirtschaftlich. Darüber hinaus hat sich gezeigt, dass die resultierenden Formteile hinsichtlich ihrer mechanischen Eigenschaften, beispielsweise im Hinblick auf ihre mechanische Festigkeit und/oder ihre Flexibilität nicht allen Anforderungen genügen. -Insoweit besteht bei den aus der Praxis bekannten Maßnahmen einerseits bezüglich der Nachhaltigkeit der Formteile, beispielsweise hinsichtlich der verwendeten Rohstoffe, und andererseits mit Blick auf die mechanischen Eigenschaften der Formteile Verbesserungsbedarf. Hier setzt die Erfindung ein.

Der Erfindung liegt demgegenüber das technische Problem zugrunde, ein Verfahren der eingangs genannten Art anzugeben, mit dem ein Formteil hergestellt werden kann, das sich sowohl durch Nachhaltigkeit bzw. durch die Verwendung nachhaltiger, insbesondere nachwachsender, Rohstoffe auszeichnet und das nichtsdestoweniger hinsichtlich seiner mechanischen Eigenschaften allen Anforderungen genügt. Darüber hinaus liegt der Erfindung das technische Problem zugrunde, ein entsprechendes Formteil anzugeben.

Zur Lösung dieses technischen Problems lehrt die Erfindung ein Verfahren zur Herstellung eines Formteils aus zumindest einem Vliesstoff, wobei der zumindest eine Vliesstoff zumindest eine Lage, insbesondere eine Lage, aus einem Endlosfilament-Kurzfaser-Gemisch aufweist, wobei mit zumindest einer Spinndüse zumindest ein Filament-Luft-Strom umfassend Endlosfilamente erzeugt wird und wobei mit zumindest einer Kurzfaser-Erzeugungseinrichtung zumindest ein Kurzfaser-Luft-Strom umfassend Kurzfasern erzeugt wird,
wobei der zumindest eine Filament-Luft-Strom und der zumindest eine Kurzfaser-Luft-Strom in einer Kontaktzone zusammengeführt werden und anschließend als Endlosfilament-Kurzfaser-Gemisch auf zumindest einem Ablageförderer, insbesondere auf zumindest einem Ablagesiebband, zum Vliesstoff bzw. zur Vliesbahn abgelegt werden, wobei die Endlosfilamente des auf dem Ablageförderer abgelegten Endlosfilament-Kurzfaser-Gemisches eine Matrix bilden, in die die Kurzfasern eingebettet sind,
wobei der zumindest eine Vliesstoff in einer Pressform angeordnet wird, wobei der Vliesstoff - insbesondere durch Temperierung der Pressform - auf eine Temperatur im Bereich von 30 °C bis 275 °C, vorzugsweise von 60 °C bis 260 °C, bevorzugt von 100 °C bis 250 °C, erwärmt wird und wobei der Vliesstoff - vorzugsweise der erwärmte Vliesstoff - mit einem Umformdruck von zumindest 1 MPa, vorzugsweise von 2 MPa bis 40 MPa, bevorzugt von 3 MPa bis 30 MPa, weiter bevorzugt von 4 MPa bis 25 MPa, sehr bevorzugt von 5 MPa bis 23 MPa, besonders bevorzugt von 6 MPa bis 22 MPa, ganz besonders bevorzugt von 7 MPa bis 21 MPa, beispielsweise von 15 MPa bis 20 MPa, beaufschlagt wird und zu dem Formteil geformt wird. Gemäß einer weiter bevorzugten Ausführungsform der Erfindung wird der zumindest eine Vliesstoff auf eine Temperatur im Bereich von 100 °C bis 200 °C erwärmt.

Dass der zumindest eine Vliesstoff in der Pressform mit einem Umformdruck beaufschlagt wird meint im Rahmen der Erfindung insbesondere, dass zumindest ein Element der Pressform, vorzugsweise ein Pressstempel, mit dem entsprechenden Umformdruck auf den zumindest einen Vliesstoff wirkt bzw. auf den zumindest einen Vliesstoff gepresst wird. Es ist möglich, dass der zumindest eine Vliesstoff in der Pressform mit einem isostatischen Umformdruck in dem angegebenen Bereich beaufschlagt wird. Dann ist die Pressform bzw. die Pressformumgebung zweckmäßigerweise entsprechend ausgestaltet, beispielsweise kann eine geschlossene Druckkammer vorgesehen sein.

Mit dem Ausdruck Filament-Luft-Strom ist im Rahmen der Erfindung insbesondere ein Strom aus von einer Spinndüse erzeugten Endlosfilamenten und Luft gemeint. Der Filament-Luft-Strom umfassend die Endlosfilamente strömt im Rahmen des erfindungsgemäßen Verfahrens vorzugsweise in Richtung des zumindest einen Kurzfaser-Luft-Stromes und/oder in Richtung des Ablageförderers. Kurzfaser-Luft-Strom meint im Rahmen der Erfindung insbesondere einen Strom aus von einer Kurzfaser-Erzeugungseinrichtung erzeugten Kurzfasern und Luft, wobei der Kurzfaser-Luft-Strom zweckmäßigerweise in Richtung des Ablageförderers und/oder in Richtung des zumindest einen Filament-Luft-Stromes strömt. Mit dem Begriff Fasern sind im Rahmen der Erfindung im Übrigen sowohl Endlosfilamente als auch Kurzfasern gemeint. Endlosfilamente unterscheiden sich aufgrund ihrer quasi endlosen Länge von Kurzfasern, die deutlich geringere Längen von beispielsweise 0,1 mm bis 60 mm aufweisen.

Erfindungsgemäß wird der zumindest eine Filament-Luft-Strom mit dem zumindest einen, insbesondere mit dem einen, Kurzfaser-Luft-Strom in einer Kontaktzone zusammengeführt. Die Kontaktzone ist im Rahmen der Erfindung insbesondere oberhalb des Ablageförderers, vorzugsweise oberhalb des Ablagesiebbandes, angeordnet, sodass der zumindest eine Filament-Luft-Strom und der zumindest eine Kurzfaser-Luft-Strom oberhalb des Ablageförderers in der Kontaktzone zusammengeführt werden. In der Kontaktzone findet eine Durchmischung des zumindest einen Filament-Luft-Stromes und des Kurzfaser-Luft-Stromes statt. Gemäß bevorzugter Ausführungsform des erfindungsgemäßen Verfahrens strömt das auf diese Weise erzeugte Endlosfilament-Kurzfaser-Gemisch von der Kontaktzone zu dem Ablageförderer als homogenes bzw. im Wesentlichen homogenes Gemisch. Durch die erfindungsgemäße Durchmischung und Verteilung der Kurzfasern und der Endlosfilamente in dem Endlosfilament-Kurzfaser-Gemisch resultieren besonders vorteilhafte Eigenschaften des abgelegten Vliesstoffes und des entsprechenden Formteils. Beispielsweise ist dadurch ein verhältnismäßig geringer Anteil der Endlosfilamente in dem zumindest einen Vliesstoff bzw. in dem Formteil ausreichend, damit die Endlosfilamente funktionssicher eine Matrix bilden können, in die die Kurzfasern eingebettet sind, sodass vorteilhafte mechanische Eigenschaften des Formteils sichergestellt werden können.

Gemäß bevorzugter Ausführungsform handelt es sich bei dem Ablageförderer um ein Ablagesiebband, besonders bevorzugt um ein luftdurchlässiges Ablagesiebband. Gemäß ganz besonders bevorzugter Ausführungsform ist das Ablagesiebband bzw. das luftdurchlässige Ablagesiebband ein kontinuierlich bewegbares, insbesondere ein endlos umlaufendes, Ablagesiebband.

Erfindungsgemäß wird der zumindest eine Vliesstoff in einer Pressform angeordnet und auf eine Temperatur im Bereich von 30 °C bis 275 °C, vorzugsweise von 60 °C bis 260 °C, bevorzugt von 100 °C bis 250 °C, erwärmt. Zweckmäßigerweise erfolgt diese Erwärmung des Vliesstoffes durch Temperierung der Pressform. Temperierung der Pressform meint in diesem Zusammenhang insbesondere die Erwärmung bzw. Erhitzung der Pressform. Grundsätzlich ist es aber auch möglich, dass der Vliesstoff bereits vor der Anordnung in der Pressform auf die entsprechende Temperatur erwärmt wird oder zumindest teilweise erwärmt bzw. vorgewärmt wird. Das kann etwa durch Heizeinrichtungen erfolgen, die der Pressform vorgelagert sind. Weiter erfindungsgemäß wird der Vliesstoff mit einem Umformdruck von zumindest 1 MPa, vorzugsweise von 2 MPa bis 40 MPa, bevorzugt von 3 MPa bis 30 MPa, weiter bevorzugt von 4 MPa bis 25 MPa, sehr bevorzugt von 5 MPa bis 23 MPa, besonders bevorzugt von 6 MPa bis 22 MPa, ganz besonders bevorzugt von 7 MPa bis 21 MPa, beispielsweise von 15 MPa bis 20 MPa beaufschlagt und zu dem Formteil geformt. Zweckmäßigerweise ist der Vliesstoff vor der Beaufschlagung mit dem Umformdruck bereits auf die Temperatur im Bereich von 30 °C bis 275 °C, vorzugsweise von 60 °C bis 260 °C, bevorzugt von 100 °C bis 250 °C, erwärmt. Grundsätzlich ist es aber auch möglich, dass der Vliesstoff bereits vor der (vollständigen) Erwärmung auf diese Temperatur mit dem Umformdruck in der Pressform beaufschlagt wird und erst dann, insbesondere durch Temperierung der Pressform, (vollständig) auf diese Temperatur erwärmt wird, sodass die Erwärmung bzw. die weitere Erwärmung des Vliesstoffes vorzugsweise während der Druckbeaufschlagung erfolgt.

Gemäß einer ganz besonders bevorzugten Ausführungsform des erfindungsgemäßen Verfahrens wird der zumindest eine Vliesstoff zunächst in der Pressform angeordnet, anschließend durch Temperierung der Pressform auf eine Temperatur im Bereich von 30 °C bis 275 °C, vorzugsweise von 60 °C bis 260 °C, bevorzugt von 100 °C bis 250 °C, erwärmt und der erwärmte Vliesstoff wird nachfolgend in der Pressform mit dem Umformdruck beaufschlagt und zu dem Formteil geformt.

Es hat sich bewährt, dass der in der Pressform angeordnete zumindest eine Vliesstoff über einen Zeitraum von 0,01 bis 25 Sekunden, vorzugsweise von 0,05 bis 20 Sekunden, bevorzugt von 0,1 bis 15 Sekunden, besonders bevorzugt von 0,2 bis 10 Sekunden, mit dem Umformdruck beaufschlagt wird.

Eine besonders bevorzugte Ausführungsform des erfindungsgemäßen Verfahrens ist dadurch gekennzeichnet, dass die Pressform ein Formoberteil und ein Formunterteil aufweist und wobei das Formoberteil und/oder das Formunterteil vorzugsweise als Pressstempel ausgebildet ist. Bevorzugt ist das Formoberteil als Pressstempel ausgebildet. Weiter bevorzugt ist das Formunterteil als komplementäres Aufnahmeelement für den Pressstempel ausgebildet. Der Umformdruck, mit dem der zumindest eine Vliesstoff in der Pressform beaufschlagt wird, ist zweckmäßigerweise der Druck, mit dem der Pressstempel auf den in der Pressform angeordneten Vliesstoff wirkt bzw. gepresst wird. Wenn die Pressform gemäß bevorzugter Ausführungsform temperiert wird, werden vorzugsweise das Formoberteil und/oder das Formunterteil, bevorzugt das Formoberteil und das Formunterteil temperiert.

Es ist im Rahmen der Erfindung besonders bevorzugt, dass die zumindest eine Spinndüse eine Meltblown-Spinndüse ist, wobei vorzugsweise zumindest zwei, insbesondere zwei, Spinndüsen bzw. Meltblown-Spinndüsen vorhanden sind, sodass besonders bevorzugt zumindest zwei, insbesondere zwei Filament-Luft-Ströme umfassend Endlosfilamente erzeugt werden und in der Kontaktzone mit dem zumindest einen Kurzfaser-Luft-Strom zusammengeführt werden. Wenn die Spinndüse bzw. die Spinndüsen gemäß bevorzugter Ausführungsform als Meltblown-Spinndüsen ausgebildet sind, werden durch diese Meltblown-Spinndüsen schmelzflüssige Kunststofffilamente (Meltblown-Endlosfilamente) erzeugt und in einen schnellen Blasluftstrom extrudiert. Die Blasluft tritt zweckmäßigerweise ebenfalls aus der jeweiligen Meltblown-Spinndüse aus und dabei handelt es sich bevorzugt um warme bzw. heiße Blasluft. Von der zumindest einen Meltblown-Spinndüse bzw. von den Meltblown-Spinndüsen strömen dann vorzugsweise Filament-Luft-Ströme aus den erzeugten Endlosfilamenten und der Blasluft in Richtung des Kurzfaser-Luft-Stromes und/oder in Richtung des Ablageförderers.

Eine bevorzugte Ausführungsform der Erfindung ist dadurch gekennzeichnet, dass die zumindest eine Meltblown-Spinndüse als Single-Row-Düse ausgebildet ist, die eine Vielzahl von in einer einzigen Reihe angeordneten Düsenöffnungen und vorzugsweise zwei beidseitig parallel zu der Reihe von Düsenöffnungen verlaufende und insbesondere in Richtung der Düsenöffnungen geneigte Luftzuströmspalte aufweist, aus denen Blasluft austritt. Zweckmäßigerweise sind die zumindest zwei, insbesondere die zwei Meltblown-Spinndüsen derart ausgebildet. Es ist auch möglich, dass zumindest eine der Meltblown-Spinndüsen, vorzugsweise die zumindest zwei, insbesondere die zwei Meltblown-Spinndüsen, als Multi-Row-Düse ausgebildet ist/sind, bei der eine Vielzahl von in mehreren Reihen angeordneten Düsenöffnungen vorhanden ist, wobei vorzugsweise jeder Düsenöffnung eine (eigene) Luftzuströmöffnung zugeordnet ist, aus der Blasluft austritt.

Gemäß bevorzugter Ausführungsform der Erfindung strömen die erzeugten Endlosfilamente von der zumindest einen Spinndüse bzw. Meltblown-Spinndüse als (erster) Filament-Luft-Strom mit einem Anfangsvolumenstrom V2 in Richtung des Kurzfaser-Luft-Stromes und/oder in Richtung des Ablageförderers. Wenn gemäß bevorzugter Ausführungsform zumindest zwei Spinndüsen bzw. Meltblown-Spinndüsen vorgesehen sind, strömt besonders bevorzugt von der zweiten Spinndüse bzw. Meltblown-Spinndüse ein zweiter Filament-Luft-Strom mit einem Anfangsvolumenstrom V3 in Richtung des Kurzfaser-Luft-Stromes und/oder in Richtung des Ablageförderers. Anfangsvolumenstrom V2 bzw. V3 meint dabei insbesondere den direkt bzw. unmittelbar unterhalb der jeweiligen Spinndüse bzw. Meltblown-Spinndüse vorliegenden Volumenstrom des Filament-Luft-Stromes nach der Beaufschlagung der Endlosfilamente mit Luft, insbesondere mit Blasluft.

Der zumindest eine Kurzfaser-Luft-Strom strömt zweckmäßigerweise mit einem Anfangsvolumenstrom V1 in Richtung des Ablageförderers und/oder in Richtung des zumindest einen Filament-Luft-Stromes. Anfangsvolumenstrom V1 meint dann insbesondere den direkt bzw. unmittelbar nach dem Austritt aus der Kurzfaser-Erzeugungseinrichtung vorliegenden Volumenstrom. Es hat sich bewährt, dass in dem Ablagebereich des Endlosfilament-Kurzfaser-Gemisches Luft bzw. Prozessluft mit einem Volumenstrom V4 durch den Ablageförderer, insbesondere durch das Ablagesiebband, bevorzugt durch das luftdurchlässige Ablagesiebband, gesaugt wird. Dazu ist zweckmäßigerweise zumindest eine Absaugeinrichtung, insbesondere ein Absauggebläse, unterhalb des Ablageförderers, insbesondere unterhalb des Ablagebereiches, angeordnet. Eine bevorzugte Ausführungsform des erfindungsgemäßen Verfahrens ist dadurch gekennzeichnet, dass der Volumenstrom V4, der durch den Ablageförderer gesaugt wird, größer ist als die Summe der Volumenströme V1 und V2, sodass gilt: V4 > (V1+V2). Wenn zumindest zwei Spinndüsen bzw. Meltblown-Spinndüsen vorhanden sind, ist es besonders bevorzugt, dass der Volumenstrom V4 größer ist als die Summe der Volumenströme V1, V2 und V3, sodass vorzugsweise gilt: V4 > (V1+V2+V3). Gemäß einer besonders bevorzugten Ausführungsform des erfindungsgemäßen Verfahrens entspricht der Volumenstrom V4 zwischen 1,05 und 30 mal, vorzugsweise zwischen 5 und 25 mal, bevorzugt zwischen 10 und 20 mal der Summe V1+V2 und/oder der Summe V1+V2+V3. Durch diese speziellen Strömungsverhältnisse kann im Rahmen des erfindungsgemäßen Verfahrens eine besonders gute Durchmischung der Kurzfasern und der Endlosfilamente und eine vorteilhafte Gleichmäßigkeit der Verteilung von Endlosfilamenten und Kurzfasern in dem abgelegten Vliesstoff und in dem Formteil erreicht werden. Dadurch kann der Anteil der benötigten Endlosfilamente weiter reduziert werden und das Formteil erfüllt nichtsdestoweniger alle Anforderungen.

Es hat sich im Übrigen bewährt, dass im Fall von zwei Spinndüsen, insbesondere Meltblown-Spinndüsen, der erste Filament-Luft-Strom in Förderrichtung F des Ablageförderers vor dem Kurzfaser-Luft-Strom strömt und dass der zweite Filament-Luft-Strom zweckmäßigerweise in Förderrichtung F des Ablageförderers hinter dem Kurzfaser-Luft-Strom strömt. Der Kurzfaser-Luft-Strom ist dann insbesondere zentral zwischen den beiden Filament-Luft-Strömen angeordnet.

Gemäß einer bevorzugten Ausführungsform des erfindungsgemäßen Verfahrens trifft der Filament-Luft-Strom in der Kontaktzone in einem spitzen Winkel α1, vorzugsweise in einem Winkel α1 von 10° bis 80°, bevorzugt von 20° bis 75°, besonders bevorzugt von 30° bis 65° auf den zumindest einen Kurzfaser-Luft-Strom und/oder trifft der zweite Filament-Luft-Strom in der Kontaktzone in einem spitzen Winkel α2, vorzugsweise in einem Winkel α2 von 10° bis 80°, bevorzugt von 20° bis 75°, besonders bevorzugt von 30° bis 65° auf den zumindest einen Kurzfaser-Luft-Strom. - Die Winkel α1 und α2 beziehen sich dabei insbesondere auf die von den Strömungsrichtungen bzw. Strömungsvektoren des Kurzfaser-Luft-Stromes (S1) und des jeweiligen Filament-Luft-Stromes (S2 bzw. S3) in bzw. kurz vor der Kontaktzone gebildeten Winkel und bezeichnen gleichsam die Neigungswinkel, in denen die Filament-Luft-Ströme in der Kontaktzone auf den Kurzfaser-Luft-Strom treffen.

Gemäß einer bevorzugten Ausführungsform der Erfindung strömt der zumindest eine Filament-Luft-Strom, insbesondere die beiden Filament-Luft-Ströme, hinsichtlich ihrer Strömungsrichtung S2 bzw. S3 entlang des gesamten Strömungsweges - insbesondere geradlinig bzw. im Wesentlichen geradlinig - von der jeweiligen Spinndüse, insbesondere Meltblown-Spinndüse, bis zu der Kontaktzone in dem Winkel α1 bzw. α2 zu der Strömungsrichtung S1 des Kurzfaser-Luft-Stroms. Dass der Filament-Luft-Strom bzw. die Filament-Luft-Ströme hinsichtlich ihrer Strömungsrichtung S2 bzw. S3 in einem Winkel α1 bzw. α2 zur Strömungsrichtung S1 des Kurzfaser-Luft-Stromes strömen, meint im Rahmen der Erfindung insbesondere, dass der Strömungsvektor der Filament-Luft-Ströme zumindest bereichsweise bzw. abschnittsweise in einem Winkel α1 bzw. α2 zum Strömungsvektor des Kurzfaser-Luft-Stromes verläuft. Im Rahmen der Erfindung ist mit den Begriffen Strömungsrichtung und Strömungsvektor insbesondere die mittlere Strömungsrichtung bzw. der mittlere Strömungsvektor des jeweiligen Stromes gemeint.

Es hat sich bewährt, dass die Winkel α1 und α2 den gleichen Wert aufweisen, sodass die beiden Filament-Luft-Ströme in der Kontaktzone bevorzugt beidseitig symmetrisch auf den - insbesondere zentral angeordneten - Kurzfaser-Luft-Strom treffen. Der Kurzfaser-Luft-Strom strömt bevorzugt hinsichtlich seiner Strömungsrichtung S1 senkrecht bzw. im Wesentlichen senkrecht zur Oberfläche des Ablageförderers. Das meint im Rahmen der Erfindung insbesondere, dass der Strömungsvektor des Kurzfaser-Luft-Stromes senkrecht bzw. im Wesentlichen senkrecht zur flächigen Erstreckung der Ablagefördereroberfläche verläuft. - Der Ausführungsform mit den Winkeln α1 und α2 in denen die Filament-Luft-Ströme in der Kontaktzone auf den Kurzfaser-Luft-Strom treffen, liegt die Erkenntnis zugrunde, dass mit diesen Winkeln eine besonders optimale Durchmischung der Endlosfilamente und der Kurzfasern in der Kontaktzone erreicht werden kann und dass besonders bevorzugt ein homogenes bzw. im Wesentlichen homogenes Endlosfilament-Kurzfaser-Gemisch auf dem Ablagesiebband zum Vliesstoff bzw. zur Vliesbahn abgelegt werden kann. Wenn die Winkel α1 und α2 gemäß ganz besonders bevorzugter Ausführungsform den gleichen Wert aufweisen wird diese Durchmischung der Endlosfilamente und der Kurzfasern weiter verbessert. Es ist vorteilhaft, wenn das Endlosfilament-Kurzfaser-Gemisch von der Kontaktzone zu dem Ablagesiebband hinsichtlich seiner Strömungsrichtung senkrecht bzw. im Wesentlichen senkrecht zur Ablagefördereroberfläche strömt.

Es liegt im Rahmen der Erfindung, dass die zumindest eine Spinndüse bzw. Meltblown-Spinndüse, vorzugsweise die zumindest zwei, insbesondere die zwei Meltblown-Spinndüsen, in einem Neigungswinkel zu der Kurzfaser-Erzeugungseinrichtung, insbesondere zu einem Auslasskanal der Kurzfaser-Erzeugungseinrichtung, angeordnet ist/sind. Der Neigungswinkel zwischen den Spinndüsen, insbesondere zwischen den Meltblown-Spinndüsen, und der Kurzfaser-Erzeugungseinrichtung bzw. dem Auslasskanal der Kurzfaser-Erzeugungseinrichtung beträgt zweckmäßigerweise (jeweils) 10° bis 80°, bevorzugt 20° bis 75°, besonders bevorzugt 30° bis 65°. Auf diese Weise können aus den Spinndüsen, insbesondere aus den Meltblown-Spinndüsen, Filament-Luft-Ströme in dem Winkel α1 bzw. α2 zur Strömungsrichtung S1 des Kurzfaser-Luft-Stromes und in Richtung des Kurzfaser-Luft-Stromes strömen. Es empfiehlt sich, dass der Neigungswinkel zwischen den Spinndüsen und dem Auslasskanal jeweils einstellbar ist.

Gemäß einer bevorzugten Ausführungsform der Erfindung werden die Endlosfilamente aus zumindest einem thermoplastischen Polymer erzeugt. Vorzugsweise werden die Endlosfilamente aus zumindest einem Polyolefin, bevorzugt aus Polypropylen und/oder Polyethylen, besonders bevorzugt aus Polypropylen erzeugt. Gemäß einer weiter bevorzugten Ausführungsform werden die Endlosfilamente aus zumindest einem Polyester, bevorzugt aus Polylactid und/oder Polyethylenterephtalat, besonders bevorzugt aus Polylactid erzeugt. Gemäß einer weiteren bevorzugten Ausführungsform der Erfindung werden die Endlosfilamente aus Polyvinylalkohol erzeugt. Grundsätzlich können die Endlosfilamente auch aus anderen thermoplastischen Polymeren, beispielsweise aus Polyamid, sowie aus Mischungen der vorstehend genannten thermoplastischen Polymere erzeugt werden. Gemäß einer bevorzugten Ausführungsform der Erfindung wird der zumindest eine Vliesstoff im Rahmen des erfindungsgemäßen Verfahrens auf eine Temperatur erwärmt, die unterhalb der Schmelztemperatur des zumindest einen thermoplastischen Polymers der Endlosfilamente liegt. Es empfiehlt sich, dass die Endlosfilamente einen mittleren Filamentdurchmesser von 0,2 bis 15 µm, vorzugsweise von 0,5 bis 12 µm, bevorzugt von 0,5 bis 10 µm aufweisen. Bei den Endlosfilamenten handelt es sich ganz besonders bevorzugt um Meltblown-Endlosfilamente.

Gemäß einer bevorzugten Ausführungsform der Erfindung werden die Endlosfilamente aus zumindest einem biologisch abbaubaren thermoplastischen Polymer, vorzugsweise aus Polylactid und/oder Polyvinylalkohol erzeugt. Es hat sich im Übrigen bewährt, dass die Endlosfilamente aus den vorstehend und oben stehend genannten thermoplastischen Polymeren oder deren Mischungen bestehen bzw. in Wesentlichen bestehen.

Erfindungsgemäß wird mit zumindest einer Kurzfaser-Erzeugungseinrichtung zumindest ein Kurzfaser-Luft-Strom umfassend Kurzfasern erzeugt. Zweckmäßigerweise ist die zumindest eine Kurzfaser-Erzeugungseinrichtung als Zerfaserungseinrichtung ausgebildet, wobei in der Kurzfaser-Erzeugungseinrichtung bzw. in der Zerfaserungseinrichtung die Kurzfasern des zumindest einen Kurzfaser-Luft-Stroms erzeugt werden, wobei der Kurzfaser-Luft-Strom bevorzugt durch einen Auslasskanal geführt wird und aus diesem austritt und wobei der Kurzfaser-Luft-Strom besonders bevorzugt von dem Auslasskanal bzw. einem Auslasskanalende senkrecht bzw. im Wesentlichen senkrecht zur Oberfläche des Ablageförderers strömt. Gemäß besonders bevorzugter Ausführungsform tritt der Kurzfaser-Luft-Strom aus dem Auslasskanal mit dem Anfangsvolumenstrom V1 aus und strömt mit der Strömungsrichtung S1 in Richtung des Ablageförderers. Der Auslasskanal ist zweckmäßigerweise Teil der Kurzfaser-Erzeugungseinrichtung, insbesondere der Zerfaserungseinrichtung. Anfangsvolumenstrom V1 meint dann zweckmäßigerweise den Volumenstrom des Kurzfaser-Luft-Stromes direkt bzw. unmittelbar nach dem Austritt aus dem Auslasskanal. Es ist bevorzugt, dass die Zerfaserungseinrichtung eine Sägemühle ist.

Es hat sich bewährt, dass der erzeugte Kurzfaser-Luft-Strom in dem Auslasskanal beschleunigt wird, insbesondere durch ein Gebläse der Kurzfaser-Erzeugungseinrichtung bzw. der Zerfaserungseinrichtung beschleunigt wird. Die Kurzfaser-Erzeugungseinrichtung weist somit gemäß bevorzugter Ausführungsform ein Gebläse auf, das der Einrichtung Luft zuführt. Es liegt im Rahmen der Erfindung, dass der Luftstrom zur Erzeugung des Kurzfaser-Luft-Stromes in der Kurzfaser-Erzeugungseinrichtung bzw. in der Zerfaserungseinrichtung durch den Zerfaserungsvorgang und/oder durch das Gebläse erzeugt wird. Der bevorzugt in dem Auslasskanal beschleunigte Kurzfaser-Luft-Strom tritt aus dem Auslasskanal dann mit dem Anfangsvolumenstrom V1 aus.

Es ist bevorzugt, dass der Kurzfaser-Luft-Strom mit einem Anteil von 0,0138 kg bis 0,0833 kg, vorzugsweise von 0,0222 kg bis 0,0694 kg, bevorzugt von 0,0277 kg bis 0,05 kg der Kurzfasern pro kg Luft aus der Kurzfaser-Erzeugungseinrichtung, insbesondere aus dem Auslasskanal, austritt. Es ist außerdem bevorzugt, dass der zumindest eine Filament-Luft-Strom bzw. die Filament-Luft-Ströme (jeweils) mit einem Anteil von 0,002 kg bis 0,5 kg, vorzugsweise von 0,01 kg bis 0,25 kg, bevorzugt von 0,015 kg bis 0,12 kg, besonders bevorzugt von 0,018 kg bis 0,1 kg der Endlosfilamente pro kg Luft aus den Spinndüsen, insbesondere aus den Meltblown-Spinndüsen, austritt bzw. austreten.

Gemäß einer bevorzugten Ausführungsform des erfindungsgemäßen Verfahrens werden die Kurzfasern des zumindest einen Vliesstoffes bzw. zumindest einer Lage des Vliesstoffes aus Naturfasern erzeugt. Dann handelt es sich bei den Kurzfasern um Naturkurzfasern. Naturfasern bzw. Naturkurzfasern meint im Rahmen der Erfindung insbesondere Fasern bzw. Kurzfasern aus nachwachsenden Rohstoffen. Bevorzugt werden die Kurzfasern des zumindest einen Vliesstoffes bzw. zumindest einer Lage des Vliesstoffes aus Zellstoff bzw. Zellulose erzeugt. Ganz besonders bevorzugt werden die Kurzfasern des zumindest einen Vliesstoffes bzw. zumindest einer Lage des Vliesstoffes aus zumindest einem aus der Gruppe: "Pulp, Bagasse, Zellulose, Bambus, Baumwolle, Agrarabfälle" ausgewählten Material erzeugt und bevorzugt aus Pulp erzeugt. Wenn die Kurzfasern aus Pulp erzeugt werden, handelt es sich bei den Kurzfasern um Pulp-Kurzfasern. Der Begriff Pulp meint im Rahmen der Erfindung insbesondere ein faseriges Material auf Basis von Zellstoff bzw. Zellulose. Bevorzugt wird im Rahmen des erfindungsgemäßen Verfahrens fester Pulp eingesetzt. Der Ausdruck fester Pulp meint dabei insbesondere ein trockenes Material auf Basis von Zellstoff bzw. Zellulose. Besonders bevorzugt wird im Rahmen der Erfindung eine Bahn aus festem Pulp eingesetzt und durch die zumindest eine Zerfaserungseinrichtung in Pulp-Kurzfasern zerfasert. Der im Rahmen des erfindungsgemäßen Verfahrens eingesetzte Pulp ist vorzugsweise konditioniert. Die in der zumindest einen Kurzfaser-Erzeugungseinrichtung erzeugten Kurzfasern, insbesondere die Pulp-Kurzfasern, haben zweckmäßigerweise eine Länge bzw. mittlere Länge von 0,05 bis 5 mm, bevorzugt von 0,1 bis 4 mm, besonders bevorzugt von 0,1 bis 3 mm.

Es liegt im Rahmen der Erfindung, dass der Anteil der Endlosfilamente in dem zumindest einen abgelegten Vliesstoff und/oder in dem Formteil 0,5 Gew.-% bis 35 Gew.-%, vorzugsweise 1 Gew.-% bis 25 Gew.-%, bevorzugt 1 Gew.-% bis 15 Gew.-%, besonders bevorzugt 1 Gew.-% bis 10 Gew.-%, ganz besonders bevorzugt 1 Gew.-% bis 8 Gew.-%, beispielsweise 1 Gew.-% bis 5 Gew.-% beträgt. Dieser Ausführungsform liegt die Erkenntnis zugrunde, dass sich das resultierende Formteil durch einen besonders zufriedenstellenden Kompromiss aus mechanischen Eigenschaften und Nachhaltigkeit, insbesondere durch die Verwendung nachhaltiger bzw. nachwachsender Rohstoffe auszeichnet. Das gilt insbesondere auch für einen Anteil der Endlosfilamente in dem zumindest einen abgelegten Vliesstoff und/oder in dem Formteil im Bereich von 1 Gew.-% bis 10 Gew.-%, vorzugsweise von 1 Gew.-% bis 8 Gew.-%, bevorzugt von 1 Gew.-% bis 5 Gew.-%. Das resultierende Formteil ist dann zu einem überwiegenden Anteil aus Kurzfasern, insbesondere Naturkurzfasern, vorzugsweise Pulp-Kurzfasern, aufgebaut und daher papierähnlich, wobei die Endlosfilamente nichtsdestoweniger eine funktionssichere Matrix für die Kurzfasern bilden.

Es ist weiter bevorzugt, dass der Anteil der Kurzfasern in dem abgelegten Vliesstoff und/oder in dem Formteil 65 Gew.-% bis 97 Gew.-%, vorzugsweise 70 Gew.-% bis 95 Gew.-%, bevorzugt 75 Gew.-% bis 95 Gew.-% beträgt.

Eine weitere Ausführungsform des erfindungsgemäßen Verfahrens ist dadurch gekennzeichnet, dass der Vliesstoff zumindest zwei Lagen aus jeweils einem Endlosfilament-Kurzfaser-Gemisch aufweist, die vorzugsweise gleichzeitig und/oder nacheinander erzeugt und übereinander auf dem zumindest einen Ablageförderer abgelegt werden, wobei die Endlosfilamente des Endlosfilament-Kurzfaser-Gemisches bzw. der Lagen jeweils eine Matrix bilden, in die die Kurzfasern eingebettet sind. Die beiden Lagen aus jeweils einem Endlosfilament-Kurzfaser-Gemisch werden bevorzugt mit zwei in Förderrichtung F des Ablageförderers hintereinander angeordneten Vlieserzeugungseinrichtungen aus zumindest einer Spinndüse, vorzugsweise aus zumindest zwei Spinndüsen und zumindest einer Kurzfaser-Erzeugungseinrichtung erzeugt. Hinsichtlich der bevorzugten Eigenschaften des Endlosfilament-Kurzfaser-Gemisches der zweiten Lage gelten insbesondere die oben stehenden Ausführungen analog. Es ist möglich, dass sich die Endlosfilament-Kurzfaser-Gemische der zumindest zwei Lagen in ihrer Zusammensetzung unterscheiden. Die Endlosfilament-Kurzfaser-Gemische der zumindest zwei Lagen weisen gemäß einer anderen Ausführungsform die gleiche bzw. im Wesentlichen die gleiche Zusammensetzung auf. Gemäß bevorzugter Ausführungsform sind die Vlieserzeugungseinrichtungen zur Erzeugung der jeweiligen Endlosfilament-Kurzfaser-Gemische oberhalb desselben Ablageförderers angeordnet, sodass die zumindest zwei Lagen des Vliesstoffes übereinander auf demselben Ablageförderer abgelegt werden.

Es ist möglich, dass der Vliesstoff zumindest drei, insbesondere zumindest vier Lagen aus jeweils einem Endlosfilament-Kurzfaser-Gemisch aufweist und dass entsprechende Vlieserzeugungseinrichtungen zur Erzeugung der Endlosfilament-Kurzfaser-Gemische vorhanden sind. Es ist außerdem möglich, dass der Vliesstoff weitere Lagen, beispielsweise Spunbond-Lagen oder Meltblown-Lagen aufweist, die mit entsprechenden Spinndüsen erzeugt werden. Solche Spunbond-Lagen und/oder Meltblown-Lagen können als abschließende Lagen oder auch als Zwischenlagen zwischen den Lagen aus Endlosfilament-Kurzfaser-Gemisch angeordnet sein. Gemäß einer Ausführungsform der Erfindung weist der Vliesstoff lediglich die zumindest eine Lage, insbesondere die eine Lage, aus einem Endlosfilament-Kurzfaser-Gemisch auf, und besteht somit bevorzugt aus zumindest einem Endlosfilament-Kurzfaser-Gemisch bzw. im Wesentlichen aus zumindest einem Endlosfilament-Kurzfaser-Gemisch.

Im Rahmen des erfindungsgemäßen Verfahrens kann die Anordnung des zumindest einen Vliesstoffes in der Pressform gemäß einer bevorzugten Ausführungsform derart erfolgen, dass der zumindest eine Vliesstoff als Vliesbahn in der Pressform angeordnet wird. Zweckmäßigerweise erfolgt während oder im Anschluss an den Formungsvorgang bzw. Pressvorgang dann eine Stanzung und/oder ein Schneiden des Vliesstoffes bzw. des Formteils, sodass insbesondere ein einzelnes Formteil resultiert. Es ist aber gemäß einer anderen bevorzugten Ausführungsform auch möglich, dass der zumindest eine Vliesstoff zunächst aus einer Vliesbahn zugeschnitten wird und dass der zumindest eine zugeschnittene Vliesstoff anschließend in der Pressform angeordnet wird. Im Rahmen der Erfindung meint Anordnung des zumindest einen Vliesstoffes in der Pressform vorzugsweise das Einlegen des zumindest einen Vliesstoffes bzw. zugeschnittenen Vliesstoffes in die Pressform.

Gemäß bevorzugter Ausführungsform des erfindungsgemäßen Verfahrens erfolgt die Anordnung des zumindest einen Vliesstoffes in der Pressform und die Formung zu dem Formteil in einem von der Vliesstofferzeugung örtlich und/oder zeitlich getrennten Verfahrensschritt. Es hat sich besonders bewährt, dass der zumindest eine Vliesstoff nach der Ablage auf dem zumindest einen Ablageförderer von dem Ablageförderer abgelöst, zu einer Rolle aufgewickelt und für die Anordnung und Formung in der Pressform - bevorzugt in einem örtlich und/oder zeitlich getrennten Verfahrensschritt - der Vliesstoff bzw. die Rolle wieder abgewickelt wird. Örtlich getrennter Verfahrensschritt meint in diesem Zusammenhang insbesondere, dass der zumindest eine Vliesstoff in einer von der Vlieserzeugungsvorrichtung zur Erzeugung des zumindest einen Vliesstoffes örtlich getrennten Vorrichtung zu dem Formteil geformt wird. Das bedeutet besonders bevorzugt, dass es sich nicht um ein kontinuierliches Verfahren aus Vliesstofferzeugung und unmittelbar anschließender Formung des Vliesstoffes zu dem Formteil handelt. Grundsätzlich liegt eine solche kontinuierliche Verfahrensweise aber auch im Rahmen der Erfindung. Zeitlich getrennter Verfahrensschritt meint in diesem Zusammenhang insbesondere, dass zwischen der Vliesstofferzeugung und der Formung des zumindest einen Vliesstoffes zu dem Formteil ein zeitlicher Abstand vorliegt, wobei dieser zeitliche Abstand beispielsweise mehrere Minuten, etwa mehr als 2 Minuten, vorzugsweise mehr als 5 Minuten, bevorzugt mehr als 10 Minuten, besonders bevorzugt mehr als 15 Minuten oder auch mehrere Stunden oder mehrere Tage betragen kann. Es ist ganz besonders bevorzugt, dass der zumindest eine Vliesstoff nach der Ablage auf dem zumindest einen Ablageförderer von dem Ablageförderer abgelöst und zu einer Rolle aufgewickelt wird und dass bei Bedarf der Vliesstoff bzw. die Rolle abgewickelt und der Vliesstoff zu dem Formteil geformt wird.

Es ist im Übrigen möglich, dass der Vliesstoff auf dem zumindest einen Ablageförderer weiterbehandelt, beispielsweise verfestigt wird und/oder mit zumindest einem Additiv versetzt wird. Es ist außerdem möglich, dass der Vliesstoff nach der Ablösung von dem zumindest einen Ablageförderer in einem separaten Schritt weiterbehandelt wird, beispielsweise verfestigt und/oder mit zumindest einem Additiv versetzt wird. Die Verfestigung des Vliesstoffes kann im Rahmen des erfindungsgemäßen Verfahrens durch zumindest einen Kalander erfolgen. Zweckmäßigerweise weist der zumindest eine Kalander zumindest ein Kalanderwalzenpaar auf, durch das der Vliesstoff unter einem Anpressdruck geführt wird. Die Weiterbehandlung, insbesondere die Versetzung des Vliesstoffes mit Additiven, vorzugsweise in Form von Besprühung, Beschichtung, Kaschierung und dergleichen, und/oder die Verfestigung des Vliesstoffes, vorzugsweise mit einem Kalander, kann gemäß einer besonders bevorzugten Ausführungsform des erfindungsgemäßen Verfahrens vor dem bevorzugten Aufwickeln des Vliesstoffes zu einer Rolle und/oder nach dem Abwickeln des Vliesstoffes bzw. der Rolle und zweckmäßigerweise vor der Anordnung des Vliesstoffes in der Pressform durchgeführt werden.

Es ist bevorzugt, dass auf zumindest eine Außenseite des Vliesstoffes - vorzugsweise auf beide Außenseiten des Vliesstoffes - zumindest eine Barriereschicht in Form einer Abschlusslage aufgebracht wird, wobei die Abschlusslage vorzugsweise eine Meltblown-Vlieslage und/oder eine Folie ist. Wenn der Vliesstoff lediglich eine Lage aus einem Endlosfilament Kurzfaser Gemisch aufweist ist es somit möglich, dass die Abschlusslage bzw. Barriereschicht auf eine oder beide Außenseiten dieser Lage des Vliesstoffes aufgebracht wird. Wenn der Vliesstoff gemäß einer Ausführungsform zwei Lagen aus jeweils einem Endlosfilament-Kurzfaser-Gemisch aufweist, kann somit auf die vliesstoffaußenseitige Außenseite einer oder beider Lagen eine Barriereschicht in Form einer Abschlusslage aufgebracht werden. Außenseite des Vliesstoffes meint hier insbesondere auch Außenoberfläche des Vliesstoffes. Der resultierende Vliesstoff weist somit vorzugsweise auf einer oder auf beiden seiner Außenseiten eine Barriereschicht in Form einer Abschlusslage auf. Im Rahmen der Erfindung kann die zumindest eine Barriereschicht beispielsweise als Barriere gegenüber Fetten und/oder Flüssigkeiten, insbesondere Wasser, wirken. Wenn es sich bei dem Formteil gemäß bevorzugter Ausführungsform um eine Lebensmittelverpackung, etwa um eine Lebensmittelschale für Speisen, handelt, kann die Abschlusslage bzw. Barriereschicht, wenn sie der Speise zugewandt ist etwa das Eindringen von Fett in das Formteil verhindern. Wenn eine solche Lebensmittelverpackung bzw. Lebensmittelschale auf der von der Speise abgewandten Seite eine Abschlusslage bzw. Barriereschicht aufweist, kann dadurch der vollständige Durchtritt von Fett durch das Formteil verhindert werden, sodass die Schale etwa von einem Benutzer in der Hand gehalten werden kann, ohne dass in unerwünschter Weise Fett austritt.

Die Aufbringung der zumindest einen Barriereschicht in Form einer Abschlusslage auf den Vliesstoff kann im Rahmen des erfindungsgemäßen Verfahrens gemäß einer Ausführungsform in der Vlieserzeugungsvorrichtung auf dem zumindest einen Ablageförderer erfolgen. Dann kann insbesondere zumindest eine Spinndüse, vorzugsweise zumindest eine Meltblown-Spinndüse, der zumindest einen Vlieserzeugungseinrichtung zur Erzeugung des Endlosfilament-Kurzfaser-Gemisches vor- und/oder nachgeschaltet sein. Es ist auch möglich, dass die zumindest eine Barriereschicht in Form einer Abschlusslage erst nach der Ablösung des Vliesstoffes von dem Ablageförderer auf den Vliesstoff aufgebracht wird. Das kann beispielsweise auch erst in der Pressform erfolgen. Dazu kann vorzugsweise in die Pressform und/oder auf den in der Pressform angeordneten Vliesstoff eine Abschlusslage, beispielsweise in Form einer Folie, eingelegt bzw. aufgelegt werden und dann zweckmäßigerweise im Zuge des Pressvorganges mit den übrigen Vliesstofflagen verbunden werden.

Der zumindest eine Vliesstoff weist somit bevorzugt an einer oder an beiden Außenseiten eine Barriereschicht in Form einer Abschlusslage auf.

Gemäß einer weiteren bevorzugten Ausführungsform des erfindungsgemäßen Verfahrens wird zumindest eine äußere Grenzschicht des Vliesstoffes und/oder des Formteils mit zumindest einem Additiv zur Einstellung der mechanischen und/oder hydrophoben und/oder oleophoben Eigenschaften des Formteils versetzt, sodass vorzugsweise zumindest eine Barriereschicht des Formteils erzeugt wird. Das zumindest eine Additiv kann dabei gemäß einer Ausführungsform der Erfindung in der Vlieserzeugungsvorrichtung zur Erzeugung des zumindest einen Vliesstoffes auf den Vliesstoff aufgebracht werden. Bei dem Additiv kann es sich um eine Avivage handeln. Äußere Grenzschicht des Vliesstoffes und/oder des Formteils meint insbesondere einen vliesstoffaußenseitigen Abschnitt einer außenseitigen Vliesstofflage, in den das Additiv eindringt. Die Versetzung der zumindest einen äußeren Grenzschicht mit dem Additiv erfolgt zweckmäßigerweise auf einer oder auf beiden Außenseiten des Vliesstoffes bzw. des Formteils.

Es ist auch möglich, dass der Vliesstoff erst nach der Ablösung von dem zumindest einen Ablageförderer mit dem zumindest einen Additiv versetzt wird, vorzugsweise vor dem bevorzugten Aufwickeln des Vliesstoffes zu einer Rolle oder nach dem Abwickeln des Vliesstoffes bzw. der Rolle. Im Rahmen des erfindungsgemäßen Verfahrens kann die Aufbringung des zumindest einen Additivs beispielsweise durch Besprühung des Vliesstoffes mit dem zumindest einen Additiv - insbesondere in Form einer Avivage - erfolgen.

Es ist weiterhin möglich, dass das zumindest eine Additiv erst nach der Formung des Vliesstoffes zu dem Formteil auf zumindest eine äußere Grenzschicht des Formteils aufgebracht wird. Auch in diesem Fall erfolgt die Aufbringung des Additivs zweckmäßigerweise auf einer Außenseite des Formteils oder auf beiden Außenseiten des Formteils. Gemäß bevorzugter Ausführungsform wird durch die Versetzung zumindest einer äußeren Grenzschicht des Vliesstoffes und/oder des Formteils mit zumindest einem Additiv zumindest eine Barriereschicht des Formteils erzeugt. Das kann beispielsweise durch Einstellung der hydrophoben und/oder oleophoben Eigenschaften des Formteils mittels des zumindest einen Additivs geschehen, sodass die mit dem zumindest einen Additiv versetzte zumindest eine äußere Grenzschicht des Vliesstoffes und/oder des Formteils hydrophobe und/oder oleophobe Eigenschaften aufweist und somit gleichsam als Barriere gegenüber Flüssigkeiten, insbesondere Wasser, und/oder Fetten wirkt. - Es ist im Rahmen der Erfindung im Übrigen möglich, dass die oben stehend beschriebene zumindest eine Abschlusslage des Vliesstoffes die äußere Grenzschicht des Vliesstoffes bildet oder Teil dieser äußeren Grenzschicht ist, die vorzugsweise mit dem zumindest einen Additiv versetzt wird.

Eine besonders bevorzugte Ausführungsform des erfindungsgemäßen Verfahrens ist dadurch gekennzeichnet, dass zumindest zwei Vliesstoffe, vorzugsweise zumindest drei Vliesstoffe, als Vliesstoffstapel in der Pressform angeordnet werden und wobei der Vliesstoffstapel - insbesondere durch Temperierung der Pressform - auf eine Temperatur im Bereich von 30 °C bis 275 °C, vorzugsweise von 60 °C bis 260 °C, bevorzugt von 100 °C bis 250 °C erwärmt wird und wobei der Vliesstoffstapel - vorzugsweise der erwärmte Vliesstoffstapel - mit einem Umformdruck von zumindest 1 MPa, vorzugsweise von 2 MPa bis 40 MPa, bevorzugt von 3 MPa bis 30 MPa, weiter bevorzugt von 4 MPa bis 25 MPa, sehr bevorzugt von 5 MPa bis 23 MPa, besonders bevorzugt von 6 MPa bis 22 MPa, ganz besonders bevorzugt von 7 MPa bis 21 MPa, beispielsweise von 15 MPa bis 20 MPa beaufschlagt wird und zu dem Formteil geformt wird. - Es hat sich in diesem Zusammenhang bewährt, dass die zumindest zwei Vliesstoffe zunächst getrennt voneinander erzeugt und vorzugsweise nach ihrer jeweiligen Ablage auf einem Ablageförderer von dem Ablageförderer abgelöst und jeweils zu einer Rolle aufgewickelt werden und dann ganz besonders bevorzugt für die Anordnung und Formung in der Pressform - sehr bevorzugt in einem örtlich und/oder zeitlich getrennten Verfahrensschritt - der jeweilige Vliesstoff bzw. die jeweilige Rolle wieder abgewickelt und die Vliesstoffe übereinander als Vliesstoffstapel in der Pressform angeordnet werden.

Der zumindest eine Vliesstoff weist im Rahmen der Erfindung insbesondere eine Dicke von 0,1 bis 3 mm, vorzugsweise von 0,2 bis 2 mm und bevorzugt von 0,3 bis 1,5 mm auf. Dicke des Vliesstoffes meint dabei insbesondere die größte Dicke des Vliesstoffes quer, insbesondere senkrecht bzw. im Wesentlichen senkrecht zu seiner flächigen Erstreckung. Die Dicke bezieht sich dabei insbesondere auf den - gegebenenfalls verfestigten - Vliesstoff vor dem Formungsvorgang zu dem Formteil. Es ist weiter bevorzugt, dass der Vliesstoff ein Flächengewicht im Bereich von 10 g/m² bis 1000 g/m², vorzugsweise von 100 g/m² bis 300 g/m² aufweist.

Zur Lösung des technischen Problems lehrt die Erfindung weiterhin ein Formteil, hergestellt mit einem vorstehend beschriebenen Verfahren, wobei das Formteil zumindest einen Vliesstoff aufweist, wobei der Vliesstoff zumindest eine Lage, insbesondere eine Lage, aus einem Endlosfilament-Kurzfaser-Gemisch aufweist und vorzugsweise aus dem Endlosfilament-Kurzfaser-Gemisch besteht bzw. im Wesentlichen besteht, wobei das Endlosfilament-Kurzfaser-Gemisch Endlosfilamente und Kurzfasern aufweist, wobei die Endlosfilamente eine Matrix für die Kurzfasern bilden und wobei der Anteil der Kurzfasern in dem Formteil 65 Gew.-% bis 97 Gew.-% beträgt.

Gemäß einer besonders bevorzugten Ausführungsform weist das Formteil eine zweidimensionale oder dreidimensionale Struktur auf. Bevorzugt handelt es sich bei dem Formteil um ein Behältnis für die Aufnahme und/oder Verpackung von Lebensmitteln, beispielsweise um eine Lebensmittelschale für Speisen. Bei dem erfindungsgemäßen Formteil kann es sich gemäß einer Ausführungsform auch um Einweggeschirr oder um ein Strukturbauteil für Automobile handeln.

Gemäß einer bevorzugten Ausführungsform der Erfindung bildet zumindest eine äußere Grenzschicht des Formteils eine Barriereschicht, die eine Wasserabsorptionsfähigkeit von weniger als 300 %, vorzugsweise von weniger als 30 %, bevorzugt von weniger als 15 %, sehr bevorzugt von weniger als 5 %, besonders bevorzugt von weniger als 2,5 %, ganz besonders bevorzugt von weniger als 1 %, der Masse des zumindest einen Vliesstoffes, insbesondere der Gesamtmasse des Formteils, aufweist und/oder eine Fettabsorptionsfähigkeit von weniger als 300 %, vorzugsweise von weniger als 30 %, bevorzugt von weniger als 15 %, sehr bevorzugt von weniger als 5 %, besonders bevorzugt von weniger als 2,5 %, ganz besonders bevorzugt von weniger als 1 %, der Masse des zumindest einen Vliesstoffes, insbesondere der Gesamtmasse des Formteils, aufweist und wobei die äußere Grenzschicht bzw. Barriereschicht vorzugsweise biologisch abbaubar ist. Wenn das Formteil gemäß einer Ausführungsform mehr als einen Vliesstoff, beispielsweise zwei Vliesstoffe, aufweist, bezieht sich die Masse insbesondere auf diese (beiden) Vliesstoffe. Es ist im Übrigen möglich, dass die oben stehend beschriebene zumindest eine Abschlusslage die äußere Grenzschicht bzw. Barriereschicht bildet oder Teil der äußeren Grenzschicht bzw. Barriereschicht ist, die die vorstehend angegebene Wasserabsorptionsfähigkeit und/oder Fettabsorptionsfähigkeit aufweist.

Gemäß einer Ausführungsform der Erfindung ist der zumindest eine Vliesstoff biologisch abbaubar. Gemäß einer ganz besonders bevorzugten Ausführungsform ist das Formteil biologisch abbaubar. Biologisch abbaubar meint im Rahmen der Erfindung insbesondere, dass die entsprechende Lage bzw. Schicht oder der Vliesstoff oder das gesamte Formteil aus biologisch abbaubaren Materialien besteht/bestehen. Das kann beispielsweise realisiert werden, indem als thermoplastisches Polymer für die Endlosfilamente ein biologisch abbaubares thermoplastisches Polymer, beispielsweise ein Polyester, insbesondere Polylactid, und/oder Polyvinylalkohol verwendet wird. Es liegt in diesem Zusammenhang im Rahmen der Erfindung, dass die Endlosfilamente aus zumindest einem biologisch abbaubaren thermoplastischen Polymer, vorzugsweise aus Polylactid und/oder Polyvinylalkohol, erzeugt werden.

Der Erfindung liegt die Erkenntnis zugrunde, dass mit dem erfindungsgemäßen Verfahren ein Formteil bereitgestellt werden kann, dass sich durch einen optimalen Kompromiss aus Nachhaltigkeit - insbesondere durch die überwiegende Verwendung von Materialien auf Basis nachwachsender Rohstoffe - und zufriedenstellenden mechanischen Eigenschaften auszeichnet. Durch die im Rahmen des erfindungsgemäßen Verfahrens erreichte optimale Durchmischung von Endlosfilamenten und Kurzfasern in dem Endlosfilament-Kurzfaser-Gemisch kann ein Formteil hergestellt werden, das sich durch einen vorteilhaft niedrigen Anteil an Endlosfilamenten auszeichnet und gemäß besonders bevorzugter Ausführungsform zu einem überwiegenden Anteil aus Naturkurzfasern, insbesondere aus Pulp-Kurzfasern besteht. Nichtsdestoweniger bilden die Endlosfilamente eine funktionssichere Matrix für die Kurzfasern, sodass das Formteil auch hinsichtlich seiner mechanischen Eigenschaften alle Anforderungen erfüllt. Trotzdem kann im Rahmen des erfindungsgemäßen Verfahrens ein überraschend geringer Anteil an Endlosfilamenten in dem Formteil realisiert werden. Wenn gemäß bevorzugter Ausführungsform Endlosfilamente auf Basis eines biologisch abbaubaren thermoplastischen Polymers eingesetzt werden ist es zudem möglich, ein Formteil bereitzustellen, das vollständig bzw. im Wesentlichen vollständig biologisch abbaubar ist. Es ist außerdem zu betonen, dass die vorstehend beschriebenen Vorteile im Rahmen des erfindungsgemäßen Verfahrens durch wenig aufwendige Maßnahmen erreicht werden und dass sich das erfindungsgemäße Verfahren insoweit auch durch eine hohe Wirtschaftlichkeit auszeichnet. Das ist insbesondere vor dem Hintergrund hervorzuheben, dass die entsprechenden Formteile - beispielsweise wenn sie als Behältnisse zur Aufnahme und/oder Verpackung von Lebensmitteln zum Einsatz kommen - Massenprodukte sind.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine Vlieserzeugungsvorrichtung zur Herstellung eines Vliesstoffes im Rahmen des erfindungsgemäßen Verfahrens
- Fig. 2a: den erfindungsgemäßen Formungsvorgang eines mit der Vlieserzeugungsvorrichtung gemäß Fig. 1 hergestellten Vliesstoffes zu dem Formteil
- Fig. 2b: den erfindungsgemäßen Formungsvorgang eines Vliesstoffstapels zu dem Formteil
- Fig. 2c: den erfindungsgemäßen Formungsvorgang eines mit der Vlieserzeugungsvorrichtung gemäß Fig.1 hergestellten und anschließend zugeschnittenen Vliesstoffes zu dem Formteil
- Fig. 3a-d: einen Querschnitt eines Ausschnittes aus einem Vliesstoff vor der Formung zu dem Formteil in verschiedenen Ausführungsformen.

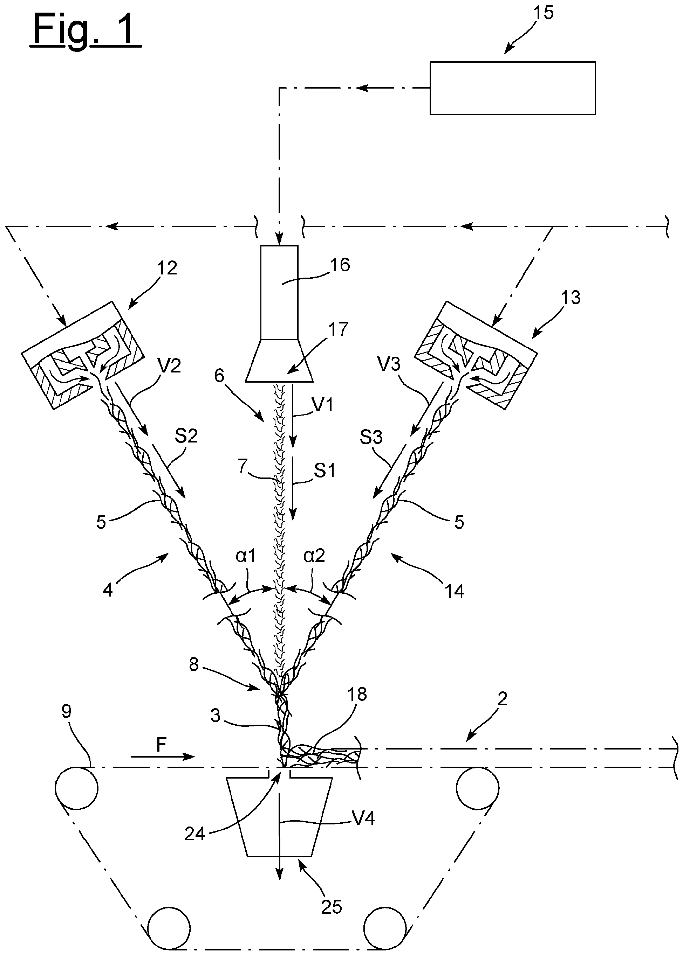

Die Figur 1 zeigt eine Vlieserzeugungsvorrichtung zur Herstellung eines Vliesstoffes 2 mit einer Lage 18 aus einem Endlosfilament-Kurzfaser-Gemisch 3 im Rahmen des erfindungsgemäßen Verfahrens. Zweckmäßigerweise und im Ausführungsbeispiel werden durch zwei als Meltblown-Spinndüsen 12, 13 ausgebildete Spinndüsen jeweils Endlosfilamente 5 erzeugt. Im Rahmen der Erfindung und im Ausführungsbeispiel mögen die Endlosfilamente 5 aus zumindest einem thermoplastischen Polymer, beispielsweise aus Polypropylen und/oder Polylactid, erzeugt werden. Mit zumindest einer vorzugsweise und im Ausführungsbeispiel als Zerfaserungseinrichtung 15 ausgebildeten Kurzfaser-Erzeugungseinrichtung werden bevorzugt und im Ausführungsbeispiel Kurzfasern 7 erzeugt. Bei der Zerfaserungseinrichtung 15 mag es sich im Ausführungsbeispiel um eine Sägemühle handeln. Bei den Kurzfasern 7 handelt es sich zweckmäßigerweise und im Ausführungsbeispiel um Naturkurzfasern, insbesondere um Pulp-Kurzfasern. In der Kurzfaser-Erzeugungseinrichtung bzw. der Zerfaserungseinrichtung 15 wird vorzugsweise und im Ausführungsbeispiel aus den Pulp-Kurzfasern ein Kurzfaser-Luft-Strom 6 umfassend die Kurzfasern 7 erzeugt. Die Zerfaserungseinrichtung 15 weist bevorzugt und im Ausführungsbeispiel einen Auslasskanal 16 mit einem Auslasskanalende 17 auf. Aus dem Auslasskanal 16 bzw. aus dem Auslasskanalende 17 der Zerfaserungseinrichtung 15 tritt der Kurzfaser-Luft-Strom 6 mit einem Anfangsvolumenstrom V1 aus. Anfangsvolumenstrom V1 meint im Rahmen der Erfindung insbesondere den Volumenstrom des Kurzfaser-Luft-Stromes 6 direkt bzw. unmittelbar nach dem Austritt aus der Zerfaserungseinrichtung 15 bzw. aus dem Auslasskanal 16. Der Kurzfaser-Luft-Strom 6 strömt mit einer Strömungsrichtung S1, die bevorzugt und im Ausführungsbeispiel senkrecht bzw. im Wesentlichen senkrecht zur Siebbandoberfläche eines luftdurchlässigen Ablagesiebbandes 9 gerichtet ist, in Richtung des Ablagesiebbandes 9. Das luftdurchlässige Ablagesiebband 9 ist bevorzugt und im Ausführungsbeispiel als endlos umlaufendes Ablagesiebband 9 ausgebildet.

Die von den Meltblown-Spinndüsen 12, 13 erzeugten Endlosfilamente 5 strömen zweckmäßigerweise und im Ausführungsbeispiel als Filament-Luft-Ströme 4, 14 mit einem Anfangsvolumenstrom V2 bzw. V3 von den Meltblown-Spinndüsen 12, 13 in Richtung des Kurzfaser-Luft-Stromes 6. Anfangsvolumenstrom V2 bzw. V3 meint dabei insbesondere den direkt bzw. unmittelbar unterhalb der Meltblown-Spinndüsen 12, 13 nach der Beaufschlagung der Endlosfilamente 5 mit Luft bzw. Blasluft vorliegenden Volumenstrom der Filament-Luft-Ströme 4, 14.

Im Rahmen der Erfindung und im Ausführungsbeispiel strömt ein erster Filament-Luft-Strom 4 in Förderrichtung F des Ablagesiebbandes 9 vor dem Kurzfaser-Luft-Strom 6. Der Filament-Luft-Strom 4 strömt vorzugsweise und im Ausführungsbeispiel hinsichtlich seiner Strömungsrichtung S2 in einem Winkel α1 zur Strömungsrichtung S1 des Kurzfaser-Luft-Stromes 6. Der zweite Filament-Luft-Strom 14 strömt bevorzugt und im Ausführungsbeispiel in Förderrichtung F des Ablagesiebbandes 9 hinter dem Kurzfaser-Luft-Strom 6. Dieser zweite Filament-Luft-Strom 14 strömt hinsichtlich seiner Strömungsrichtung S3 weiter bevorzugt und gemäß Fig. 1 in einem Winkel α2 zur Strömungsrichtung S1 des Kurzfaser-Luft-Stromes 6. Die Filament-Luft-Ströme 4, 14 strömen somit vorzugsweise und im Ausführungsbeispiel von beiden Seiten des zentral angeordneten Kurzfaser-Luft-Stromes 6 in den Winkeln α1 bzw. α2 auf den Kurzfaser-Luft-Strom 6 zu.

Zweckmäßigerweise und im Ausführungsbeispiel werden die Filament-Luft-Ströme 4, 14 und der Kurzfaser-Luft-Strom 6 oberhalb des Ablagesiebbandes 9 in einer Kontaktzone 8 zusammengeführt und als Endlosfilament-Kurzfaser-Gemisch 3 in einem Ablagebereich 24 auf dem Ablagesiebband 9 zum Vliesstoff 2 bzw. zur Vliesbahn abgelegt. Die Endlosfilamente 5 des abgelegten Endlosfilament-Kurzfaser-Gemisches 3 bilden dabei erfindungsgemäß eine Matrix 10, in die die Kurzfasern 7 eingebettet sind. Bevorzugt und im Ausführungsbeispiel treffen die Filament-Luft-Ströme 4, 14 in der Kontaktzone 8 jeweils in einem spitzen Winkel α1 bzw. α2 auf den Kurzfaser-Luft-Strom 6. Sehr bevorzugt und im Ausführungsbeispiel weisen die Winkel α1 und α2 den gleichen Wert auf, sodass die beiden Filament-Luft-Ströme 4, 14 in der Kontaktzone 8 beidseitig symmetrisch auf den zentral angeordneten Kurzfaser-Luft-Strom 6 treffen. Im Ausführungsbeispiel gemäß den Figuren mögen die Winkel α1 und α2 jeweils etwa 30° betragen. Die Winkel α1 und α2 beziehen sich dabei insbesondere auf die von den Strömungsrichtungen bzw. Strömungsvektoren des Kurzfaser-Luft-Stromes (S1) und des jeweiligen Filament-Luft-Stromes (S2 bzw. S3) in bzw. kurz vor der Kontaktzone gebildeten Winkel und bezeichnen somit gleichsam die Neigungswinkel, in denen die Filament-Luft-Ströme 4, 14 in der Kontaktzone 8 auf den Kurzfaser-Luft-Strom 6 treffen. Im Rahmen der Erfindung und im Ausführungsbeispiel strömen die beiden Filament-Luft-Ströme 4, 14 im Übrigen entlang ihres gesamten Strömungsweges von der jeweiligen Meltblown-Spinndüse 12, 13 bis zu der Kontaktzone 8 hinsichtlich ihrer Strömungsrichtung S2 bzw. S3 in dem Winkel α1 bzw. α2 zu der Strömungsrichtung S1 des Kurzfaser-Luft-Stromes 6.

Vorzugsweise und im Ausführungsbeispiel gemäß der Figur 1 wird in dem Ablagebereich 24 des Endlosfilament-Kurzfaser-Gemisches 3 auf dem Ablagesiebband 9 Luft bzw. Prozessluft mit einem Volumenstrom V4 von unten durch das Ablagesiebband 9 gesaugt. Dazu ist vorzugsweise und im Ausführungsbeispiel eine Absaugeinrichtung 25 unterhalb des Ablagesiebbandes 9, insbesondere unterhalb des Ablagebereiches 24, angeordnet. Bevorzugt ist der Volumenstrom V4 größer als die Summe der Volumenströme V1, V2 und V3 (V4 > (V1+V2+V3)).

Es ist bevorzugt, dass das Endlosfilament-Kurzfaser-Gemisch 3 von der Kontaktzone 8 zu dem Ablagesiebband 9 als homogenes bzw. im Wesentlichen homogenes Gemisch strömt. Das homogene Endlosfilament-Kurzfaser-Gemisch 3 wird anschließend in dem Ablagebereich 24 zum Vliesstoff 2 bzw. zur Vliesbahn abgelegt. Weiter bevorzugt und im Ausführungsbeispiel strömt das Endlosfilament-Kurzfaser-Gemisch 3 von der Kontaktzone 8 zu dem Ablagesiebband 9 bzw. zu dem Ablagebereich 24 hinsichtlich seiner Strömungsrichtung senkrecht bzw. im Wesentlichen senkrecht zur Siebbandoberfläche.

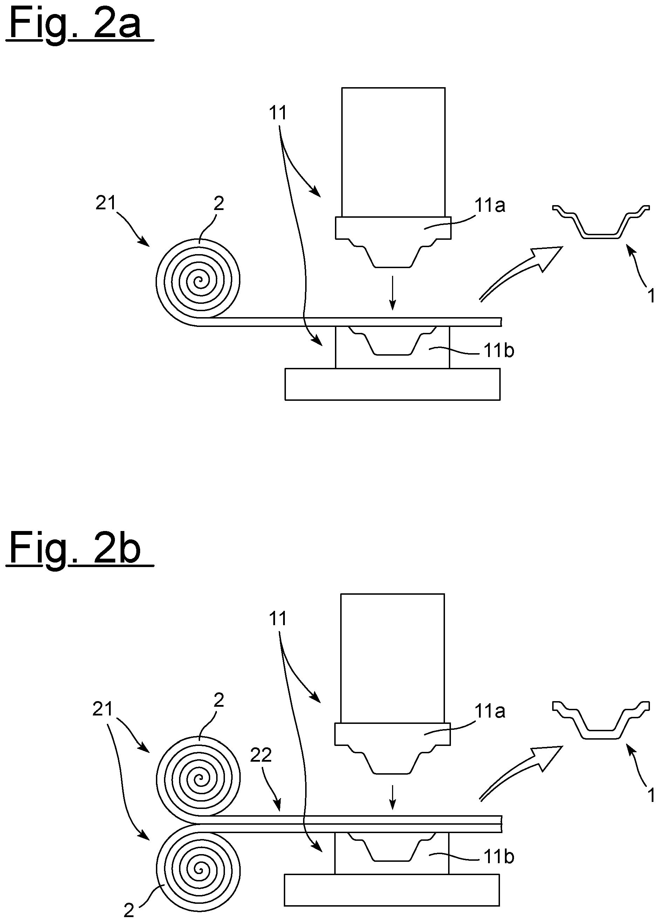

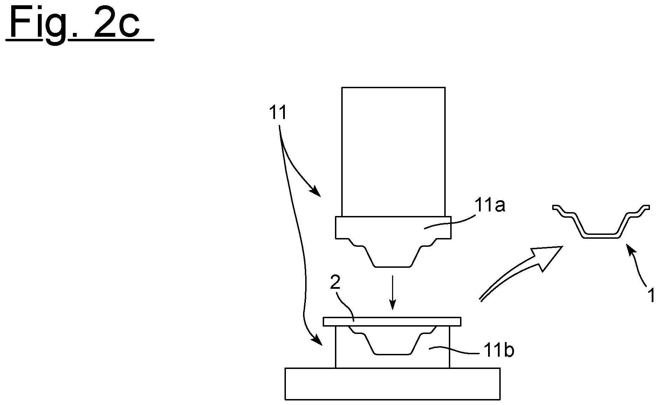

Die Figuren 2a und 2b zeigen den erfindungsgemäßen Formungsvorgang eines Vliesstoffes 2 (Figur 2a) bzw. eines Vliesstoffstapels 22 aus zwei Vliesstoffen 2 (Figur 2b) zu dem Formteil 1. Im Anschluss an die in der Figur 1 dargestellte Vlieserzeugung in der Vlieserzeugungsvorrichtung wird der zumindest eine Vliesstoff 2 gemäß bevorzugter Ausführungsform der Erfindung von dem Ablagesiebband 9 abgelöst und zu einer Rolle 21 aufgewickelt. Für die Anordnung und Formung in der Pressform 11 wird der Vliesstoff 2 bzw. die Rolle 21 dann zweckmäßigerweise wieder abgewickelt. Das ist in den Figuren 2a und 2b zu erkennen. Zweckmäßigerweise und gemäß den Figuren 2a und 2b wird der Vliesstoff 2 bzw. der Vliesstoffstapel 22 in Form einer Vliesbahn bzw. in Form von Vliesbahnen in der Pressform 11 angeordnet. Vorzugsweise und im Ausführungsbeispiel gemäß den Figuren 2a und 2b erfolgt dann während oder im Anschluss an den Formungsvorgang bzw. Pressvorgang eine Stanzung und/oder ein Schneiden des Vliesstoffes 2/des Vliesstoffstapels 22 bzw. des Formteils 1, sodass insbesondere ein einzelnes Formteil 1 resultiert. In der Figur 2c ist der erfindungsgemäße Formungsvorgang eines Vliesstoffes 2 dargestellt, der bevorzugt und gemäß Figur 2c zunächst aus einer Vliesbahn zugeschnitten wurde und anschließend als zugeschnittener Vliesstoff 2 in der Pressform 11 angeordnet wird.

Der Vliesstoff 2 wird bevorzugt und in der Ausführungsform gemäß den Figuren 2a und 2c in einer Pressform 11, die vorzugsweise und im Ausführungsbeispiel aus einem als Pressstempel ausgebildeten Formoberteil 11a und einem vorzugsweise und im Ausführungsbeispiel als komplementäres Aufnahmeelement für den Pressstempel ausgebildeten Formunterteil 11b besteht, angeordnet und durch Temperierung bzw. Erwärmung der Pressform 11 auf eine Temperatur im Bereich von 30 °C bis 275 °C, bevorzugt von 100 °C bis 250 °C erwärmt. Bevorzugt und im Ausführungsbeispiel wird der erwärmte Vliesstoff 2 dann mit einem Umformdruck von zumindest 1 MPa, vorzugsweise von 2 MPa bis 40 MPa beaufschlagt und zu dem Formteil 1 geformt. Dass der Vliesstoff 2 in der Pressform 11 mit einem Umformdruck beaufschlagt wird meint dabei insbesondere, dass das als Pressstempel ausgebildete Formoberteil 11a mit dem entsprechenden Umformdruck auf den zumindest einen Vliesstoff 2 wirkt bzw. auf den zumindest einen Vliesstoff 2 gepresst wird. Das ist in den Figuren 2a, 2b und 2c durch Pfeile angedeutet.

In der Figur 2b werden im Übrigen zwei übereinander angeordnete Vliesstoffe 2 als Vliesstoffstapel 22 in der Pressform 11 angeordnet. Die Erwärmung des Vliesstoffstapels 22 und die Formung mit dem Umformdruck zu dem Formteil 1 erfolgt analog zu der vorstehend beschriebenen Verfahrensführung mit einem einzigen Vliesstoff 2 in der Figur 2a bzw. 2c. Es ist im Rahmen der Erfindung möglich, dass es sich bei dem Vliesstoffstapel 22 um einen Stapel zugeschnittener Vliesstoffe 2 handelt. Das Formteil 1 ist im Übrigen vorzugsweise und im Ausführungsbeispiel gemäß den Figuren 2a bis 2c als Lebensmittelschale für Speisen ausgebildet.

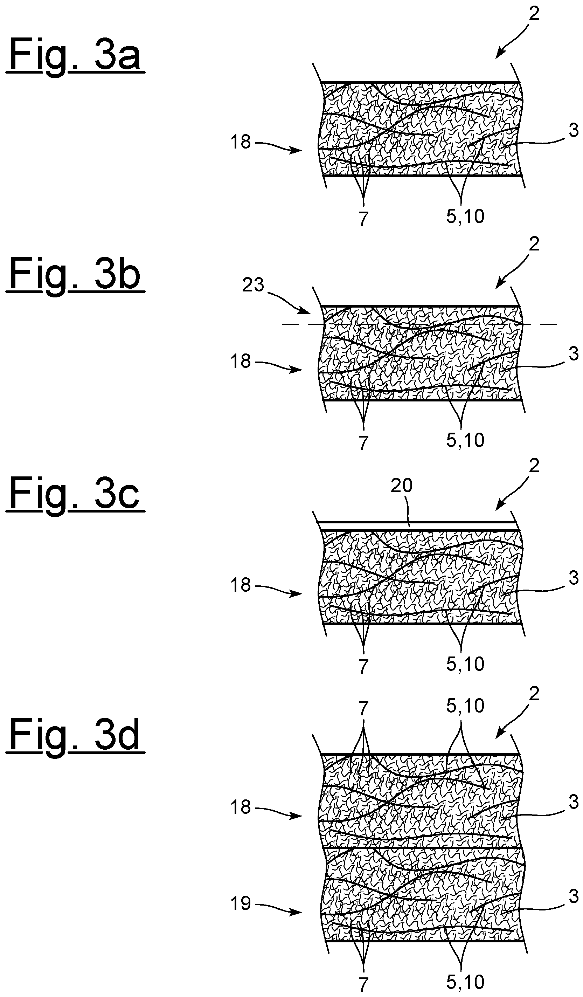

Die Figuren 3a bis 3d zeigen jeweils einen Querschnitt eines Ausschnittes aus einem Vliesstoff 2 vor der Formung zu dem Formteil 1 in verschiedenen Ausführungsformen. **In** der Figur 3a ist ein Vliesstoff 2 in einer bevorzugten Ausgestaltung mit einer einzigen Lage 18 aus einem Endlosfilament-Kurzfaser-Gemisch 3 dargestellt. Das Endlosfilament-Kurzfaser-Gemisch 3 weist Endlosfilamente 5 und Kurzfasern 7 auf, wobei die Endlosfilamente 5 eine Matrix 10 für die Kurzfasern 7 bilden. Die Kurzfasern 7 sind in die Matrix 10 eingebettet.

**In** der Figur 3b ist eine weitere bevorzugte Ausführungsform eines Vliesstoffes 2 dargestellt, bei dem eine äußere Grenzschicht 23 mit zumindest einem Additiv zur Einstellung der mechanischen und/oder hydrophoben und/oder oleophoben Eigenschaften des Formteils versetzt ist. Äußere Grenzschicht 23 des Vliesstoffes 2 meint hier insbesondere einen vliesstoffaußenseitigen Abschnitt der Vliesstofflage 18. Das ist in der Figur 3b gestrichelt angedeutet. In der bevorzugten Ausführungsform gemäß der Figur 3b ist eine äußere Grenzschicht 23 auf einer Außenseite des Vliesstoffes 2 mit einem Additiv versetzt. Nach dem anschließenden Formungsschritt resultiert durch die Versetzung der äußeren Grenzschicht 23 im Rahmen der Erfindung vorzugsweise eine Barriereschicht des Formteils 1, die beispielsweise als Barriere gegenüber Flüssigkeiten, insbesondere Wasser, und/oder Fetten wirkt.

In der Figur 3c ist eine weitere bevorzugte Ausführungsform eines Vliesstoffes 2 mit einer Lage 18 eines Endlosfilament-Kurzfaser-Gemisches 3 dargestellt. Auf einer Außenseite des Vliesstoffes 2 ist eine Barriereschicht in Form einer Abschlusslage 20 aufgebracht, wobei die Abschlusslage 20 vorzugsweise und im Ausführungsbeispiel eine Meltblown-Vlieslage ist. Diese Barriereschicht in Form der Abschlusslage 20 kann beispielsweise als Barriere gegenüber Flüssigkeiten, insbesondere Wasser, und/oder Fetten wirken.

In der Figur 3d ist eine weitere Ausführungsform eines Vliesstoffes 2 aus zwei Lagen 18, 19 aus jeweils einem Endlosfilament-Kurzfaser-Gemisch 3 dargestellt. Die Endlosfilamente 5 des Endlosfilament-Kurzfaser-Gemisches 3 bzw. der Lagen 18, 19 bilden jeweils eine Matrix 10, in die die Kurzfasern 7 eingebettet sind.

Zweckmäßigerweise und im Ausführungsbeispiel gemäß den Figuren 3a bis 3d mögen die Endlosfilamente auf Basis zumindest eines thermoplastischen Polymers ausgebildet sein. Die Kurzfasern 7 mögen empfohlenermaßen und im Ausführungsbeispiel aus Naturfasern erzeugt sein und vorzugsweise aus Pulp erzeugt sein, sodass es sich um Pulp-Kurzfasern 7 handelt. Der Anteil der Endlosfilamente 5 in dem zumindest einen abgelegten Vliesstoff 2 beträgt bevorzugt 1 Gew.-% bis 8 Gew.-% und mag im Ausführungsbeispiel beispielsweise 5 Gew.-% betragen.

## Patentansprüche

1. Verfahren zur Herstellung eines Formteils (1) aus zumindest einem Vliesstoff (2), wobei der zumindest eine Vliesstoff (2) zumindest eine Lage (18), insbesondere eine Lage (18), aus einem Endlosfilament-Kurzfaser-Gemisch (3) aufweist, wobei mit zumindest einer Spinndüse zumindest ein Filament-Luft-Strom (4) umfassend Endlosfilamente (5) erzeugt wird und wobei mit zumindest einer Kurzfaser-Erzeugungseinrichtung zumindest ein Kurzfaser-Luft-Strom (6) umfassend Kurzfasern (7) erzeugt wird,
wobei der zumindest eine Filament-Luft-Strom (4) und der zumindest eine Kurzfaser-Luft-Strom (6) in einer Kontaktzone (8) zusammengeführt werden und anschließend als Endlosfilament-Kurzfaser-Gemisch (3) auf zumindest einem Ablageförderer, insbesondere auf zumindest einem Ablagesiebband (9), zum Vliesstoff (2) bzw. zur Vliesbahn abgelegt werden, wobei die Endlosfilamente (5) des auf dem Ablageförderer abgelegten Endlosfilament-Kurzfaser-Gemisches (3) eine Matrix (10) bilden, in die die Kurzfasern (7) eingebettet sind,
wobei der zumindest eine Vliesstoff (2) in einer Pressform (11) angeordnet wird, wobei der Vliesstoff (2) - insbesondere durch Temperierung der Pressform (11) - auf eine Temperatur im Bereich von 30 °C bis 275 °C, vorzugsweise von 60 °C bis 260 °C, bevorzugt von 100 °C bis 250 °C, erwärmt wird und wobei der Vliesstoff (2) - vorzugsweise der erwärmte Vliesstoff (2) - mit einem Umformdruck von zumindest 1 MPa, vorzugsweise von 2 MPa bis 40 MPa, bevorzugt von 3 MPa bis 30 MPa, weiter bevorzugt von 4 MPa bis 25 MPa, sehr bevorzugt von 5 MPa bis 23 MPa, besonders bevorzugt von 6 MPa bis 22 MPa, ganz besonders bevorzugt von 7 MPa bis 21 MPa, beispielsweise von 15 MPa bis 20 MPa, beaufschlagt wird und zu dem Formteil (1) geformt wird.

2. Verfahren nach Anspruch 1, wobei die Pressform (11) ein Formoberteil (11a) und ein Formunterteil (11b) aufweist und wobei das Formoberteil (11a) und/oder das Formunterteil (11b) vorzugsweise als Pressstempel ausgebildet ist.

3. Verfahren nach einem der Ansprüche 1 oder 2, wobei die zumindest eine Spinndüse eine Meltblown-Spinndüse (12) ist, wobei vorzugsweise zumindest zwei, insbesondere zwei, Spinndüsen bzw. Meltblown-Spinndüsen (12, 13) vorhanden sind, sodass besonders bevorzugt zumindest zwei, insbesondere zwei Filament-Luft-Ströme (4, 14) umfassend Endlosfilamente (5) erzeugt werden und in der Kontaktzone (8) mit dem zumindest einen Kurzfaser-Luft-Strom (6) zusammengeführt werden.

4. Verfahren nach einem der Ansprüche 1 bis 3, wobei der Filament-Luft-Strom (4) in der Kontaktzone (8) in einem spitzen Winkel α1, vorzugsweise in einem Winkel α1 von 10° bis 80°, bevorzugt von 20° bis 75°, besonders bevorzugt von 30° bis 65° auf den zumindest einen Kurzfaser-Luft-Strom (6) trifft und/oder wobei der zweite Filament-Luft-Strom (14) in der Kontaktzone (8) in einem spitzen Winkel α2, vorzugsweise in einem Winkel α2 von 10° bis 80°, bevorzugt von 20° bis 75°, besonders bevorzugt von 30° bis 65° auf den zumindest einen Kurzfaser-Luft-Strom (6) trifft.

5. Verfahren nach Anspruch 4, wobei die Winkel α1 und α2 den gleichen Wert aufweisen, sodass die beiden Filament-Luft-Ströme (4, 14) in der Kontaktzone (8) bevorzugt beidseitig symmetrisch auf den - insbesondere zentral angeordneten - Kurzfaser-Luft-Strom (6) treffen.

6. Verfahren nach einem der Ansprüche 1 bis 5, wobei die Endlosfilamente (5) aus zumindest einem thermoplastischen Polymer, vorzugsweise aus zumindest einem Polyolefin, bevorzugt aus Polypropylen und/oder Polyethylen, besonders bevorzugt aus Polypropylen erzeugt werden.

7. Verfahren nach einem der Ansprüche 1 bis 6, wobei die Endlosfilamente (5) aus zumindest einem thermoplastischen Polymer, vorzugsweise aus zumindest einem Polyester, bevorzugt aus Polylactid und/oder Polyethylenterephthalat, besonders bevorzugt aus Polylactid erzeugt werden und/oder wobei die Endlosfilamente aus Polyvinylalkohol erzeugt werden.

8. Verfahren nach einem der Ansprüche 1 bis 7, wobei die zumindest eine Kurzfaser-Erzeugungseinrichtung als Zerfaserungseinrichtung (15) ausgebildet ist, wobei in der Kurzfaser-Erzeugungseinrichtung bzw. in der Zerfaserungseinrichtung (15) die Kurzfasern (7) des zumindest einen Kurzfaser-Luft-Stroms (6) erzeugt werden, wobei der Kurzfaser-Luft-Strom (6) bevorzugt durch einen Auslasskanal (16) geführt wird und aus diesem austritt und wobei der Kurzfaser-Luft-Strom (6) besonders bevorzugt von dem Auslasskanal (16) bzw. einem Auslasskanalende (17) senkrecht bzw. im Wesentlichen senkrecht zur Oberfläche des Ablageförderers strömt.

9. Verfahren nach einem der Ansprüche 1 bis 8, wobei die Kurzfasern (7) des zumindest einen Vliesstoffes (2) bzw. zumindest einer Lage (18) des Vliesstoffes (2) aus Naturfasern erzeugt werden, vorzugsweise aus zumindest einem aus der Gruppe: "Pulp, Bagasse, Zellulose, Bambus, Baumwolle, Agrarabfälle" ausgewählten Material erzeugt werden und bevorzugt aus Pulp erzeugt werden.

10. Verfahren nach einem der Ansprüche 1 bis 9, wobei der Anteil der Endlosfilamente (5) in dem zumindest einen abgelegten Vliesstoff (2) und/oder in dem Formteil (1) 0,5 Gew.-% bis 35 Gew.-%, vorzugsweise 1 Gew.-% bis 25 Gew.-%, bevorzugt 1 Gew.-% bis 15 Gew.-%, besonders bevorzugt 1 Gew.-% bis 10 Gew.-%, ganz besonders bevorzugt 1 Gew.-% bis 8 Gew.-%, beispielsweise 1 Gew.-% bis 5 Gew.-% beträgt.

11. Verfahren nach einem der Ansprüche 1 bis 10, wobei der Anteil der Kurzfasern (7) in dem abgelegten Vliesstoff (2) und/oder in dem Formteil (1) 65 Gew.-% bis 97 Gew.-%, vorzugsweise 70 Gew.-% bis 95 Gew.-%, bevorzugt 75 Gew.-% bis 95 Gew.-% beträgt.

12. Verfahren nach einem der Ansprüche 1 bis 11, wobei der Vliesstoff (2) zumindest zwei Lagen (18, 19) aus jeweils einem Endlosfilament-Kurzfaser-Gemisch (3) aufweist, die vorzugsweise gleichzeitig und/oder nacheinander erzeugt und übereinander auf dem zumindest einen Ablageförderer abgelegt werden, wobei die Endlosfilamente (5) des Endlosfilament-Kurzfaser-Gemisches (3) bzw. der Lagen (18, 19) jeweils eine Matrix (10) bilden, in die die Kurzfasern (7) eingebettet sind.

13. Verfahren nach einem der Ansprüche 1 bis 12, wobei der zumindest eine Vliesstoff (2) nach der Ablage auf dem zumindest Ablageförderer von dem Ablageförderer abgelöst, zu einer Rolle (21) aufgewickelt und für die Anordnung und Formung in der Pressform (11) - bevorzugt in einem örtlich und/oder zeitlich getrennten Verfahrensschritt - der Vliesstoff (2) bzw. die Rolle (21) wieder abgewickelt wird.

14. Verfahren nach einem der Ansprüche 1 bis 13, wobei auf zumindest eine Außenseite des Vliesstoffes (2) - vorzugsweise auf beide Außenseiten des Vliesstoffes (2) - zumindest eine Barriereschicht in Form einer Abschlusslage (20) aufgebracht wird, wobei die Abschlusslage (20) vorzugsweise eine Meltblown-Vlieslage ist und/oder eine Folie ist.

15. Verfahren nach einem der Ansprüche 1 bis 14, wobei zumindest eine äußere Grenzschicht (23) des Vliesstoffes (2) und/oder des Formteils (1) mit zumindest einem Additiv zur Einstellung der mechanischen und/oder hydrophoben und/oder oleophoben Eigenschaften des Formteils (1) versetzt wird, sodass vorzugsweise zumindest eine Barriereschicht des Formteils (1) erzeugt wird.

16. Verfahren nach einem der Ansprüche 1 bis 15, wobei zumindest zwei Vliesstoffe (2), vorzugsweise zumindest drei Vliesstoffe (2), als Vliesstoffstapel (22) in der Pressform (11) angeordnet werden und wobei der Vliesstoffstapel (22) - insbesondere durch Temperierung der Pressform (11) - auf eine Temperatur im Bereich von 30 °C bis 275 °C, vorzugsweise von 60 °C bis 260 °C, bevorzugt von 100 °C bis 250 °C, erwärmt wird und wobei der Vliesstoffstapel (22) - vorzugsweise der erwärmte Vliesstoffstapel (22) - mit einem Umformdruck von zumindest 1 MPa, vorzugsweise von 2 MPa bis 40 MPa, bevorzugt von 3 MPa bis 30 MPa, weiter bevorzugt von 4 MPa bis 25 MPa, sehr bevorzugt von 5 MPa bis 23 MPa, besonders bevorzugt von 6 MPa bis 22 MPa, ganz besonders bevorzugt von 7 MPa bis 21 MPa, beispielsweise von 15 MPa bis 20 MPa beaufschlagt wird und zu dem Formteil (1) geformt wird.

17. Formteil, hergestellt mit einem Verfahren nach einem der Ansprüche bis 16, wobei das Formteil (1) zumindest einen Vliesstoff (2) aufweist, wobei der Vliesstoff (2) zumindest eine Lage (18), insbesondere eine Lage (18), aus einem Endlosfilament-Kurzfaser-Gemisch (3) aufweist und vorzugsweise aus dem Endlosfilament-Kurzfaser-Gemisch (3) besteht bzw. im Wesentlichen besteht, wobei das Endlosfilament-Kurzfaser-Gemisch (3) Endlosfilamente (5) und Kurzfasern (7) aufweist, wobei die Endlosfilamente (5) eine Matrix (10) für die Kurzfasern (7) bilden und wobei der Anteil der Kurzfasern (7) in dem Formteil (1) 65 Gew.-% bis 97 Gew.-% beträgt.

18. Formteil nach Anspruch 17, wobei das Formteil (1) eine zweidimensionale oder dreidimensionale Struktur aufweist.

19. Formteil nach einem der Ansprüche 17 oder 18, wobei zumindest eine äußere Grenzschicht (23) des Formteils (1) eine Barriereschicht bildet, die eine Wasserabsorptionsfähigkeit von weniger als 300 %, vorzugsweise von weniger als 30 %, bevorzugt von weniger als 15 %, sehr bevorzugt von weniger als 5 %, besonders bevorzugt von weniger als 2,5 %, ganz besonders bevorzugt von weniger als 1 %, der Masse des zumindest einen Vliesstoffes (2), insbesondere der Gesamtmasse des Formteils (1), und/oder eine Fettabsorptionsfähigkeit von weniger als 300 %, vorzugsweise von weniger als 30 %, bevorzugt von weniger als 15 %, sehr bevorzugt von weniger als 5 %, besonders bevorzugt von weniger als 2,5 %, ganz besonders bevorzugt von weniger als 1 %, der Masse des zumindest einen Vliesstoffes (2), insbesondere der Gesamtmasse des Formteils (1), aufweist und wobei die äußere Grenzschicht (23) bzw. die Barriereschicht vorzugsweise biologisch abbaubar ist.

## Claims

1. Method for producing a moulded part (1) from at least one nonwoven fabric (2), wherein the at least one nonwoven fabric (2) comprises at least one layer (18), in particular one layer (18), of a continuous filament-short fibre mixture (3), wherein at least one filament-air stream (4) comprising continuous filaments (5) is produced by at least one spinneret and wherein at least one short fibre-air stream (6) comprising short fibres (7) is produced by at least one short fibre generating device,
wherein the at least one filament-air stream (4) and the at least one short fibre-air stream (6) are combined in a contact zone (8) and subsequently deposited as a continuous filament-short fibre mixture (3) on at least one depositing conveyor, in particular on at least one depositing foraminous belt (9), to form a nonwoven fabric (2) or a nonwoven web, wherein the continuous filaments (5) of the continuous filament-short fibre mixture (3) deposited on the depositing conveyor form a matrix (10) in which the short fibres (7) are embedded,
wherein the at least one nonwoven fabric (2) is arranged in a pressing mould (11), wherein the nonwoven fabric (2) is heated - in particular by temperature control of the pressing mould (11) - to a temperature in the range of 30°C to 275°C, preferably of 60°C to 260°C, preferably of 100°C to 250°C, and wherein the nonwoven fabric (2) - preferably the heated nonwoven fabric (2) - is subjected to a deformation pressure of at least 1 MPa, preferably of 2 MPa to 40 MPa, preferably of 3 MPa to 30 MPa, further preferably of 4 MPa to 25 MPa, very preferably of 5 MPa to 23 MPa, particularly preferably of 6 MPa to 22 MPa, quite particularly preferably of 7 MPa to 21 MPa, for example of 15 MPa to 20 MPa, and is moulded into the moulded part (1).

2. Method according to Claim 1, wherein the pressing mould (11) comprises an upper mould part (11a) and a lower mould part (11b) and wherein the upper mould part (11a) and/or the lower mould part (11b) are preferably formed as a punch.

3. Method according to one of Claims 1 or 2, wherein the at least one spinneret is a meltblown spinneret (12), wherein preferably at least two, in particular two spinnerets or meltblown spinnerets (12, 13) are provided, so that particularly preferably at least two, in particular two filament-air streams (4, 14) comprising continuous filaments (5) are generated and combined with the at least one short fibre-air stream (6) in the contact zone (8).

4. Method according to one of Claims 1 to 3, wherein the filament-air stream (4) impinges upon the at least one short fibre-air stream (6) in the contact zone (8) at an acute angle α1, preferably at an angle α1 of 10° to 80°, preferably 20° to 75°, and particularly preferably 30° to 65° and/or wherein the second filament-air stream (14) impinges upon the at least one short fibre-air stream (6) in the contact zone (8) at an acute angle α2, preferably at an angle α2 of 10° to 80°, preferably 20° to 75°, and particularly preferably 30° to 65°.

5. Method according to Claim 4, wherein the angles α1 and α2 have the same value so that the two filament air streams (4, 14) in the contact zone (8) preferably impinge upon the - in particular centrally arranged - short fibre-air stream (6) symmetrically on both sides.

6. Method according to one of Claims 1 to 5, wherein the continuous filaments (5) are produced from at least one thermoplastic polymer, preferably from at least one polyolefin, preferably from polypropylene and/or polyethylene, particularly preferably from polypropylene.

7. Method according to one of Claims 1 to 6, wherein the continuous filaments (5) are produced from at least one thermoplastic polymer, preferably from at least one polyester, preferably from polylactide and/or polyethylene terephthalate, particularly preferably from polylactide and/or wherein the continuous filaments are produced from polyvinyl alcohol.

8. Method according to one of Claims 1 to 7, wherein the at least one short fibre generating device is configured in the form of a defibration device (15), wherein the short fibres (7) of the at least one short fibre-air stream (6) are generated in the short fibre generating device or in the defibration device (15), wherein the short fibre-air stream (6) is preferably guided through an outlet channel (16) and leaves the outlet channel, and wherein the short fibre-air stream (6) particularly preferably flows from the outlet channel (16) or from the outlet channel end (17) perpendicularly or substantially perpendicularly to the surface of the depositing conveyor.

9. Method according to one of Claims 1 to 8, wherein the short fibres (7) of the at least one nonwoven fabric (2) or at least one layer (18) of the nonwoven fabric (2) are produced from natural fibres, preferably from at least one material selected from the following group: "pulp, bagasse, cellulose, bamboo, cotton, agricultural waste", and preferably from pulp.

10. Method according to one of Claims 1 to 9, wherein the proportion of the continuous filaments (5) in the at least one deposited nonwoven fabric (2) and/or in the moulded part (1) is 0.5% by weight to 35% by weight, preferably 1% by weight to 25% by weight, preferably 1% by weight to 15% by weight, particularly preferably 1% by weight to 10% by weight, quite particularly preferably 1% by weight to 8% by weight, for example 1% by weight to 5% by weight.

11. Method according to one of Claims 1 to 10, wherein the proportion of the short fibres (7) in the deposited nonwoven fabric (2) and/or in the moulded part (1) is 65% by weight to 97% by weight, preferably 70% by weight to 95% by weight, preferably 75% by weight to 95% by weight.

12. Method according to one of Claims 1 to 11, wherein the nonwoven fabric (2) comprises at least two layers (18, 19) of respectively one continuous filament-short fibre mixture (3), the layers being preferably produced simultaneously and/or successively and deposited one above the other on the at least one depositing conveyor, wherein the continuous filaments (5) of the continuous filament-short fibre mixture (3) or the layers (18, 19) each form a matrix (10), in which the short fibres (7) are embedded.

13. Method according to one of Claims 1 to 12, wherein after depositing on at least the depositing conveyor, the at least one non-woven fabric (2) is removed from the depositing conveyor, wound into a roll (21) and the nonwoven fabric (2) or the roll (21) is unwound again in a - preferably spatially and/or temporally separate method step - for arrangement and moulding in the pressing mould (11).

14. Method according to one of Claims 1 to 13, wherein at least one barrier layer in the form of a final layer (20) is applied to at least one outer side of the nonwoven fabric (2), preferably to both outer sides of the nonwoven fabric (2), wherein the final layer (20) is preferably a meltblown nonwoven layer and/or a film.

15. Method according to one of Claims 1 to 14, wherein at least one outer boundary layer (23) of the nonwoven fabric (2) and/or the moulded part (1) is mixed with at least one additive for adjusting the mechanical properties and/or hydrophobic properties and/or oleophobic properties of the moulded part (1), so that preferably at least one barrier layer of the moulded part (1) is produced.

16. Method according to one of Claims 1 to 15, wherein at least two nonwoven fabrics (2), preferably at least three nonwoven fabrics (2), are arranged as a nonwoven fabric stack (22) in the pressing mould (11), and wherein the nonwoven fabric stack (22) - in particular by temperature control of the pressing mould (11) - is heated to a temperature in the range of 30°C to 275°C, preferably of 60°C to 260°C, preferably of 100°C to 250°C, and wherein the nonwoven fabric stack (22) - preferably the heated nonwoven fabric stack (22) - is subjected to a deformation pressure of at least 1 MPa, preferably of 2 MPa to 40 MPa, preferably of 3 MPa to 30 MPa, further preferably of 4 MPa to 25 MPa, very preferably of 5 MPa to 23 MPa, particularly preferably of 6 MPa to 22 MPa, quite particularly preferably of 7 MPa to 21 MPa, for example of 15 MPa to 20 MPa and is moulded into the moulded part (1).

17. Moulded part produced by a method according to one of Claims 11 to 16, wherein the moulded part (1) comprises at least one nonwoven fabric (2), wherein the nonwoven fabric (2) comprises at least one layer (18), in particular one layer (18), of a continuous filament-short fibre mixture (3) and preferably consists of or substantially consists of the continuous filament-short fibre mixture (3), wherein the continuous filament-short fibre mixture (3) comprises continuous filaments (5) and short fibres (7) and wherein the continuous filaments (5) form a matrix (10) for the short fibres (7) and wherein the proportion of the short fibres (7) in the moulded part (1) is 65% by weight to 97% by weight.

18. Moulded part according to Claim 17, wherein the moulded part (1) has a two-dimensional or three-dimensional structure.

19. Moulded part according to one of Claims 17 or 18, wherein at least one outer boundary layer (23) of the moulded part (1) forms a barrier layer, which has a water absorption capacity of less than 300%, preferably less than 30%, preferably less than 15%, very preferably less than 5%, particularly preferably less than 2.5%, quite particularly preferably less than 1% of the mass of the at least one non-woven fabric (2), in particular the total mass of the moulded part (1) and/or has a fat absorption capacity of less than 300%, preferably less than 30%, preferably less than 15%, very preferably less than 5%, particularly preferably less than 2.5%, quite particularly preferably less than 1% of the mass of the at least one non-woven fabric (2), in particular the total mass of the moulded part (1), and wherein the outer boundary layer (23) or the barrier layer is preferably biodegradable.

## Revendications

1. Procédé, destiné à fabriquer une pièce moulée (1) à partir d'au moins un non-tissé (2), l'au moins un non-tissé (2) comportant au moins une couche (18), notamment une couche (18), en un mélange (3) de filaments continus et de fibres courtes, avec au moins une filière étant généré au moins un flux (4) de filaments et d'air comprenant des filaments continus (5) et à l'aide d'au moins un dispositif de génération de fibres courtes étant généré au moins un flux (6) de fibres courtes et d'air comprenant des fibres courtes (7),
l'au moins un flux (4) de filaments et d'air et l'au moins un flux (6) de fibres courtes et d'air étant réunis dans une zone de contact (8) et étant déposés ensuite sous la forme d'un mélange (3) de filaments continus et de fibres courtes sur au moins un convoyeur de dépose, notamment sur au moins une toile perforée (9) de dépose, pour former le non-tissé (2) ou une bande de non-tissé, les filaments continus (5) du mélange (3) de filaments continus et de fibres courtes constituant une matrice (10), dans laquelle sont incorporées les fibres courtes (7),
l'au moins un non-tissé (2) étant placé dans un moule de pressage (11), le non-tissé (2) étant chauffé - notamment par mise en température contrôlée du moule de pressage (11) - à une température de l'ordre de 30 °C à 275 °C, de préférence de 60 °C à 260 °C, de manière préférentielle de 100 °C à 250 °C et le non-tissé (2) - de préférence le non-tissé (2) chauffé - étant soumis à une pression de formage d'au moins 1 MPa, de préférence de 2 MPa à 40 MPa, de manière préférentielle de 3 MPa à 30 MPa, de manière plus préférentielle de 4 MPa à 25 MPa, de manière très préférentielle de 5 MPa à 23 MPa, de manière particulièrement préférentielle de 6 MPa à 22 MPa, de manière tout particulièrement préférentielle de 7 MPa à 21 MPa, par exemple de 15 MPa à 20 MPa et étant façonnée pour obtenir la pièce moulée (1).

2. Procédé selon la revendication 1, le moule de pressage (11) comportant une partie supérieure (11a) de moule et une partie inférieure (11b) de moule et la partie supérieure (11a) de moule et / ou la partie inférieure (11b) de moule étant conçue de préférence sous la forme d'un poinçon.

3. Procédé selon l'une quelconque des revendications 1 ou 2, l'au moins une filière étant une filière (12) d'extrusion-soufflage, de préférence au moins deux, notamment deux filières ou filières (12, 13) d'extrusion-soufflage étant présentes, de sorte que de manière particulièrement préférentielle au moins deux, notamment deux flux (4, 14) de filaments et d'air comprenant des filaments continus (5) soient générés et soient réunis dans la zone de contact (8) avec l'au moins un flux (6) de fibres courtes et d'air.

4. Procédé selon l'une quelconque des revendications 1 à 3, le flux (4) de filaments et d'air étant incident dans la zone de contact (8) sous un angle aigu α1, de préférence sous un angle α1 de 10° à 80°, de manière préférentielle de 20° à 75°, de manière particulièrement préférentielle de 30° à 65° sur l'au moins un flux (6) de fibres courtes et d'air et / ou le deuxième flux (14) de filaments et d'air étant incident dans la zone de contact (8) sous un angle aigu α2, de préférence sous un angle α2 de 10° à 80°, de manière préférentielle de 20° à 75°, de manière particulièrement préférentielle de 30° à 65° sur l'au moins un flux (6) de fibres courtes et d'air.

5. Procédé selon la revendication 4, l'angle α1 et α2 ayant la même valeur, de sorte que les deux flux (4, 14) de filaments et d'air soient incidents dans la zone de contact (8), de manière préférentielle de manière symétrique de part et d'autre sur le flux (6) de fibres courtes et d'air - placé notamment de manière centrale **-.**

6. Procédé selon l'une quelconque des revendications 1 à 5, les filaments continus (5) étant générés à partir d'au moins un polymère thermoplastique, de préférence d'au moins une polyoléfine, de manière préférentielle en un polypropylène et / ou un polyéthylène, de manière particulièrement préférentielle en un polypropylène.

7. Procédé selon l'une quelconque des revendications 1 à 6, les filaments continus (5) étant générés à partir d'au moins un polymère thermoplastique, de préférence en au moins un polyester, de manière préférentielle en un polylactide et / ou un polyéthylène téréphtalate, de manière particulièrement préférentielle en un polylactide et / ou les filaments continus étant générés à partir d'un alcool polyvinylique.

8. Procédé selon l'une quelconque des revendications 1 à 7, l'au moins un dispositif de génération de fibres courtes étant conçu sous la forme d'un dispositif de défibrage (15), dans le dispositif de génération de fibres courtes ou dans le dispositif de défibrage (15) étant générées les fibres courtes (7) de l'au moins un flux (6) de fibres courtes et d'air, le flux (6) de fibres courtes et d'air étant guidé de manière préférentielle à travers un canal de sortie (16) et sortant de celui-ci et le flux (6) de fibres courtes et d'air s'écoulant de manière particulièrement préférentielle hors du canal de sortie (16) ou d'une extrémité (17) du canal de sortie, à la perpendiculaire ou sensiblement à la perpendiculaire de la surface du convoyeur de dépose.

9. Procédé selon l'une quelconque des revendications 1 à 8, les fibres courtes (7) de l'au moins un non-tissé (2) ou de l'au moins une couche (18) du non-tissés (2) étant générées à partir de fibres naturelles, de préférence à partir d'au moins une matière sélectionnée dans le groupe comprenant : « la pulpe, la bagasse, la cellulose, le bambou, le coton, les déchets agricoles » et de manière préférentielle à partir de pulpe.

10. Procédé selon l'une quelconque des revendications 1 à 9, la proportion des filaments continus (5) dans l'au moins un non-tissé (2) déposé et / ou dans la pièce moulée (1) s'élevant à de 0,5 % en poids à 35 % en poids, de préférence à de 1 % en poids à 25 % en poids, de manière préférentielle à de 1 % en poids à 15 % en poids, de manière particulièrement préférentielle, à de 1 % en poids à 10 % en poids, de manière tout particulièrement préférentielle à de 1 % en poids à 8 % en poids, par exemple à de 1 % en poids à 5 % en poids.

11. Procédé selon l'une quelconque des revendications 1 à 10, la proportion des fibres courtes (7) dans le non-tissé (2) déposé et / ou dans la pièce moulée (1) s'élevant à de 65 % en poids à 97 % en poids, de préférence à de 70 % en poids à 95 % en poids, de manière préférentielle à de 75 % en poids à 95 % en poids.

12. Procédé selon l'une quelconque des revendications 1 à 11, le non-tissé (2) comportant au moins deux couches (18, 19) en chacune un mélange (3) de filaments continus et de fibres courtes, qui sont générées de préférence simultanément et / ou successivement et déposées en superposition sur l'au moins un convoyeur de dépose, les filaments continus (5) du mélange (3) de filaments continus et de fibres courtes ou des couches (18, 19) constituant chaque fois une matrice (10), dans laquelle sont incorporées les fibres courtes (7).

13. Procédé selon l'une quelconque des revendications 1 à 12, après la dépose sur l'au moins un convoyeur de dépose, l'au moins un non-tissé (2) étant désolidarisé du convoyeur de dépose, enroulé en un rouleau (21) et pour le placement et le façonnage dans le moule de pressage (11) - de manière préférentielle dans une étape de procédé séparée localement et / ou dans le temps -, le non-tissé (2) ou le rouleau (21) étant de nouveau déroulé.

14. Procédé selon l'une quelconque des revendications 1 à 13, sur au moins une face extérieure du non-tissé (2) - de préférence sur les deux faces extérieures du non-tissé (2) - étant appliquée au moins une couche formant barrière, sous la forme d'une couche de terminaison (20), la couche de terminaison (20) étant de préférence une couche de non-tissé obtenu par extrusion-soufflage et / ou un film.

15. Procédé selon l'une quelconque des revendications 1 à 14, au moins couche de délimitation (23) externe du non-tissé (2) et / ou de la pièce moulée (1) étant mélangée avec au moins un additif, destiné à régler les propriétés mécaniques et / ou hydrophobes et / ou oléophobes de la pièce moulée (1), de sorte que de préférence soit générée au moins une couche formant barrière de la pièce moulée (1).

16. Procédé selon l'une quelconque des revendications 1 à 15, au moins deux non-tissés (2), de préférence au moins trois non-tissés (2) étant placés sous la forme d'une pile (22) de non-tissés dans le moule de pressage (11) et la pile (22) de non-tissés étant chauffée - notamment par mise en température contrôlée du moule de pressage (11) - à une température de l'ordre de de 30 °C à 275 °C, de préférence de 60 °C à 260 °C, de manière préférentielle de 100 °C à 250 °C et la pile (22) de non-tissés - de préférence la pile (22) de non-tissés chauffée - étant soumise à une pression de formage d'au moins 1 MPa, de préférence de 2 MPa à 40 MPa, de manière préférentielle de 3 MPa à 30 MPa, de manière plus préférentielle de 4 MPa à 25 MPa, de manière très préférentielle de 5 MPa à 23 MPa, de manière particulièrement préférentielle de 6 MPa à 22 MPa, de manière tout particulièrement préférentielle de 7 MPa à 21 MPa, par exemple de 15 MPa à 20 MPa et façonnée pour obtenir la pièce moulée (1).

17. Pièce moulée, fabriquée à l'aide d'un procédé selon l'une quelconque des revendications 11 à 16, la pièce moulée (1) comportant au moins un non-tissé (2), le non-tissé (2) comportant au moins une couche (18), notamment une couche (18) en un mélange (3) de filaments continus et de fibres courtes et étant constituée ou sensiblement constituée de préférence du mélange (3) de filaments continus et de fibres courtes, le mélange (3) de filaments continus et de fibres courtes comportant des filaments continus (5) et des fibres courtes (7), les filaments continus (5) constituant une matrice (10) pour les fibres courtes (7) et la proportion des fibres courtes (7) dans la pièce moulée (1) s'élevant à de 65 % en poids à 97 % en poids.

18. Pièce moulée selon la revendication 17, la pièce moulée (1) comportant une structure bidimensionnelle ou tridimensionnelle.

19. Pièce moulée selon l'une quelconque des revendications 17 ou 18, au moins une couche de délimitation (23) externe de la pièce moulée (1) constituant une couche formant barrière, qui fait preuve d'un pouvoir d'absorption d'eau de moins de 300 %, de préférence de moins de 30 %, de manière préférentielle de moins de 15 %, de manière très préférentielle de moins de 5 %, de manière particulièrement préférentielle de moins de 2,5 %, de manière tout particulièrement préférentielle de moins de 1 % de la masse de l'au moins un non-tissé (2), notamment de la masse totale de la pièce moulée (1), et / ou d'un pouvoir d'absorption de graisse de moins de 300 %, de préférence de moins de 30 %, de manière préférentielle de moins de 15 %, de manière très préférentielle de moins de 5 %, de manière particulièrement préférentielle, de moins de 2,5 %, de manière tout particulièrement préférentielle, de moins de 1 % de la masse de l'au moins un non-tissé (2), notamment de la masse totale de la pièce moulée (1) et la couche de délimitation (23) externe, de préférence la couche formant barrière étant de préférence biodégradable.
